# EUROPEAN PATENT APPLICATION

(11) **EP 4 372 581 A1**
(43) Date of publication of application: **22.05.2024**
(21) Application number: 22207885.9
(22) Date of filing: 16.11.2022
(51) Int. Cl.: G06F 16/27, G06F 16/21, G06F 16/2458

(54) **DATA STORAGE AND ACCESS**

(71) Applicant: Man Group Operations Limited, London EC4R 3AD (GB)
(72) Inventor: Blackburn, James, London (GB); Dealtry, William, London (GB); Bounds, Richard, London (GB)
(74) Representative: St Clair Jones, Gregory Arthur Langley

(57) **Abstract**

Embodiments described herein relate to a computer-implemented method (700), comprising: receiving (702), at a client device (202), a first request to store a first data segment in a remote key-value data store (212); generating (704), at the client device (202), a unique first data layer key (314) based on values stored in the first data segment (316), wherein the first data layer key (314) uniquely identifies the first data segment (316); generating (706), at the client device (202), a first reference layer data segment (376) based on components of the first data layer key (314); and sending (708), to the data store (212) over a network (206), for storing in the data store (212): a first data layer key-value pair (312) comprising the first data layer key (314) and the first data segment (316); and a first reference layer key-value pair (372) comprising a reference layer key (374) and the first reference layer data segment (376).

## Description

### FIELD

The present disclosure relates to methods and systems for storing and accessing data in a data store and, in particular, to storing and accessing data in a datastore using an application running on a client device.

### BACKGROUND

Existing database systems require a coordinating database management system to manage database queries from client devices, such requests to read, write or modify data in the database datastore. The database management system is typically implemented as one or more database management servers that interact with the client devices and the datastore, so that data can be stored in the datastore and accessed from the datastore.

For example, columnar databases generally split large data sets into chunks. When parts of the data are modified, the affected chunks must also be modified. If each data chunk has a fixed name, in an environment where the chunks are being written to and read concurrently, additional data structures are required in order to track which version of a given chunk is the appropriate one for a given operation.

This imposes a cost when a process wishes to write new data to the datastore. In particular, the process must establish whether there are any existing versions of the chunk, and must then update whichever structures are tracking the version of the chunk that the process is writing to. Implementing structures to track versions of each chunk of data written to the datastore imposes significant overhead, and typically requires the use of a specific database management server.

Implementing a specific database management server to manage database queries from client devices therefore introduces cost into the database system. In particular, operating costs arise from the need for the database management server to interface with the datastore and track the different versions of the data chunks stored in the datastore. It will be appreciated that the cost associated with the database system can also be expressed in terms of the computational resources and energy usage associated with implementing the database management server.

The use of the database management server also introduces latency into the database system, because all queries from client devices need to be processed by the database management server. The latency associated with implementing the database management server increases the amount of time associated with accessing data from the datastore. Moreover, where multiple client devices are attempting to access (e.g. read and/or write) data to the datastore, the database management server can become overloaded, meaning that the time associated with processing each client device's query increases. This can be a particular issue for time-sensitive data, because the increased access time increases the likelihood of such data being out of date by the time it is received at the client device.

To address the issue of reducing the time required to access data in a datastore, existing solutions use distributed servers instead of a single database management server. For example, multiple database management servers can be implemented, where each server handles a certain fraction of the total number of queries received from client devices. Accordingly, each database management server handles a fraction of the work that would otherwise be done by a single database management server. It will be appreciated, however, that such a solution increases the operational cost, computational resources and energy usage of the database system.

Accordingly, there exists a need for a database system that allows data to be accessed in a more efficient manner. More specifically, there exists a need for a database system that makes more efficient use of resources when providing access to data stored in a datastore, and that allows time-sensitive data to be more efficiently accessed.

### SUMMARY

This summary introduces concepts that are described in more detail in the detailed description. It should not be used to identify essential features of the claimed subject matter, nor to limit the scope of the claimed subject matter.

According to a first aspect of the present disclosure, there is provided a computer-implemented method, comprising: receiving, at a client device, a first request to store a first data segment in a remote key-value data store; generating, at the client device, a unique first data layer key based on values stored in the first data segment, wherein the first data layer key uniquely identifies the first data segment; generating, at the client device, a first reference layer data segment based on components of the first data layer key; and sending, to the data store over a network, for storing in the data store: a first data layer key-value pair comprising the first data layer key and the first data segment; and a first reference layer key-value pair comprising a reference layer key and the first reference layer data segment.

As explained in more detail below, the above features allow for a database environment that is 'serverless' and is horizontally scalable across a large number of client devices. The 'serverless' environment reduces the cost and latency associated with implementing a database management system at a server associated with a data store, meaning that data can be rapidly and efficiently accessed by client devices.

In particular, the above features avoid the need for a server to resolve conflicts between concurrent reads and writes of the data in the data store, or concurrency issues when writing data, because data cannot be partially written to the data store. Conflicts between reading and writing data are avoided by not overwriting previous versions of data when writing subsequent versions of data, which is achieved through the use of the unique keys that uniquely identify the data. The stored data can therefore be said to be 'immutable'. Concurrency issues are avoided by providing an architecture in which a subsequent version of data can only be accessed once the reference layer key-value pair has been written to the data store, as described further below.

Generating, at the client device, the first reference layer data segment based on components of the first data layer key may comprise: generating, at the client device, a first version layer data segment based on components of the first data layer key; generating, at the client device, a unique first version layer key based on values stored in the first version layer data segment, wherein the first version layer key uniquely identifies the first version layer data segment; generating, at the client device, the first reference layer data segment based on components of the first version layer key; and sending, to the data store over the network, a first version layer key-value pair comprising the first version layer key and the first version layer data segment, for storing in the data store.

Implementing a version layer allows for the use of a version layer data segment, which can be used as a linked list to provide easier access to previous versions of the data.

Generating, at the client device, the first reference layer data segment based on components of the first data layer key may comprise: generating, at the client device, a first index layer data segment based on components of the first data layer key; generating, at the client device, a unique first index layer key based on values stored in the first index layer data segment, wherein the first index layer key uniquely identifies the first index layer data segment; generating, at the client device, the first reference layer data segment based on components of the first index layer key; and sending, to the data store over the network, a first index layer key-value pair comprising the first index layer key and the first index layer data segment, for storing in the data store.

Implementing an index layer allows for the use of an index layer data segment, which can be used to provide access to various chunks of data, in the event that a user's data exceeds a size constraint of the data store and needs to be split up into chunks.

Generating, at the client device, the first reference layer data segment based on components of the first index layer key may comprise: generating, at the client device, a first version layer data segment based on components of the first index layer key; generating, at the client device, a unique first version layer key based on values stored in the first version layer data segment, wherein the first version layer key uniquely identifies the first version layer data segment; generating, at the client device, the first reference layer data segment based on components of the first version layer key; and
sending, to the data store over the network, a first version layer key-value pair comprising the first version layer key and the first version layer data segment, for storing in the data store.

Implementing a version layer and an index layer allows for both providing a mechanism for accessing previous versions of data, and providing access to various chunks of data.

Generating, at the client device, the first data layer key may comprise: splitting, at the client device, the first data segment into a plurality of first data segment chunks; and generating, at the client device, a plurality of unique first data layer keys, wherein each of the plurality of first data layer keys is generated based on values stored in a respective one of the plurality of first data segment chunks; wherein the first index layer data segment is generated based on components of each of the plurality of first data layer keys. The index layer can therefore be used to generate the keys associated with various chunks of data, in the event that a user's data exceeds a size constraint of the data store.

The first index layer data segment may include fields storing values of one or more of: the start column, end column, start index, and end index of the plurality of first data segment chunks. Storing this information allows for filtering of the first data segment chunks at the index layer level, when reading data.

The computer-implemented method may further comprise: compressing, at the client device, the first data segment; wherein the first data layer key-value pair comprises the first data layer key and the compressed first data segment. Compressing the first data segment at the client device significantly reduces the amount of data sent over the network from the client device to the data store, and avoids the need for the data store to perform compression of the first data segment.

The computer-implemented method may further comprise: generating, at the client device, the reference layer key; sending, to the data store, the generated reference layer key; and determining that the generated reference layer key does not already exist in the data store if the data store does not return a data segment corresponding to the generated reference layer key.

The client device can therefore determine whether a version of data being written to the data store is an initial version, based on the reference layer key.

The request to store the first data segment may comprise an identifier. Generating, at the client device, the reference layer key may comprise generating, at the client device, the reference layer key based on the identifier.

The computer-implemented method may further comprise: receiving, at a client device, a second request to store a second data segment in the data store; generating, at the client device, a unique second data layer key based on the values stored in the second data segment, wherein the second data layer key uniquely identifies the second data segment; generating, at the client device, a second reference layer data segment based on components of the second version layer key; and sending, to the data store over the network, for storing in the data store: a second data layer key-value pair comprising the second data layer key and the second data segment; and a second reference layer key-value pair comprising the reference layer key and the second reference layer data segment.

As the second data segment is stored using a unique second data layer key, the second data segment is stored without overwriting the first data segment. Accordingly, data stored in the data store is immutable. The immutability of the data stored in the data store avoids conflicts between reads and writes of data, meaning that a server is not needed to resolve such conflicts.

Generating, at the client device, the second reference layer data segment based on components of the second data layer key may comprise: generating, at the client device, a second version layer data segment based on components of the second data layer key, wherein generating the second version layer data segment comprises: storing, in the second version layer data segment, a first plurality of values configured to permit generation of the second data layer key; and storing, in the second version layer data segment, a second plurality of values configured to permit generation of the first version layer key; generating, at the client device, a unique second version layer key based on values stored in the second version layer data segment, wherein the second version layer key uniquely identifies the second version layer data segment; generating, at the client device, the second reference layer data segment based on components of the second version layer key; and sending, to the data store over the network, a second version layer key-value pair comprising the second version layer key and the second version layer data segment, for storing in the data store.

The version layer data segment therefore allows two types of key to be generated: an index layer key for the current version of the data, and a version layer key for the previous version of the data. The version layer data segments therefore act as a linked list, providing simple access to previous versions of data.

Generating, at the client device, the second data layer key may comprise: splitting, at the client device, the second data segment into a plurality of second data segment chunks; generating, at the client device, a plurality of unique second data layer keys, wherein each of the plurality of second data layer keys is generated based on values stored in a respective one of the plurality of second data segment chunks; generating, at the client device, a second index layer data segment based on components of each of the plurality of second data layer keys; identifying, at the client device, duplicated data by comparing values stored in the second index layer data segment with values stored in the first index layer data segment; generating, at the client device, a deduplicated second index layer data segment by removing any identified duplicated data from the second index layer data segment; and generating, at the client device, a unique second index layer key based on values stored in the deduplicated second index layer data segment; wherein the second reference layer data segment is generated based on components of the second index layer key.

Deduplicating data in this way avoids storing duplicate data in the data store. This method of deduplication also allows for duplicate data to be identified at the index layer, meaning that a previous version of the data itself does not need to be retrieved from the data store in order to establish whether a subsequent version of the data duplicates some of the previous data. Accordingly, deduplication is carried out in a more efficient manner.

The request to store the second data segment may comprise the identifier. The method may further comprise: generating, at the client device, the reference layer key based on the identifier; sending, to the data store, the reference layer key; and determining that the reference layer key exists in the data store responsive to receiving the first reference layer data segment. This means that the client device can easily establish whether it is writing the first version of data or a subsequent version of data to the data store.

The key-value data store may be suitable for storing column-oriented data, row-oriented data or data otherwise oriented. One or more of the data layer key, version layer key and index layer key may include a hash of the content of its corresponding data segment. One or more of the data layer key, version layer key and index layer key may include a timestamp indicating the time of generation of the key. The timestamp ensures that each key is unique.

According to a second aspect of the present disclosure, there is provided a computer-implemented method, comprising: sending, from a client device in communication with a remote key-value data store over a network, a reference layer key to the data store; receiving, from the data store, a reference layer data segment uniquely identified by the reference layer key; generating, at the client device, a unique data layer key based on values stored in the reference layer data segment; sending, from the client device, the data layer key to the data store; and receiving, from the data store, a data layer data segment uniquely identified by the data layer key.

The above features allow data to be rapidly and efficiently read from the data store, because they permit a 'serverless' database environment to be implemented, as explained above.

Generating, at the client device, the data layer key based on values stored in the reference layer data segment may comprise: generating, at the client device, a unique version layer key based on values stored in the reference layer data segment; sending, from the client device, the version layer key to the data store; receiving, from the data store, a version layer data segment identified by the version layer key; and generating, at the client device, the data layer key based on values stored in the version layer data segment.

Generating, at the client device, the data layer key based on values stored in the version layer data segment may comprise: generating, at the client device, a unique previous version layer key based on values stored in the version layer data segment; sending, from the client device, the previous version layer key to the data store; receiving, from the data store, a previous version layer data segment identified by the previous version layer key; and generating, at the client device, the data layer key based on values stored in the version layer data segment.

Generating, at the client device, the data layer key based on values stored in the reference layer data segment may comprise: generating, at the client device, a unique index layer key based on values stored in the reference layer data segment; sending, from the client device, the index layer key to the data store; receiving, from the data store, an index layer data segment identified by the index layer key; and generating, at the client device, the data layer key based on values stored in the index layer data segment.

The computer-implemented method may further comprise: receiving, at the client device, a request comprising a data range of interest; generating, at the client device, a filtered index layer data segment by filtering the values in the index layer data segment in accordance with the data range; wherein the data layer key is generated at the client device based on values stored in the filtered index layer data segment. This allows data to be filtered using the index layer data segment, meaning that the client device does not need to retrieve all of the data in order to filter the data. Accordingly, data filtering can be carried out in a more efficient manner, without transferring large volumes of data over the network.

Generating, at the client device, the index layer key based on values stored in the reference layer data segment may comprise: generating, at the client device, a unique version layer key based on values stored in the reference layer data segment; sending, from the client device, the version layer key to the data store; receiving, from the data store, an index layer data segment identified by the version layer key; and generating, at the client device, the index layer key based on values stored in the version layer data segment.

Generating, at the client device, the index layer key based on values stored in the version layer data segment may comprise: generating, at the client device, a unique previous version layer key based on values stored in the version layer data segment; sending, from the client device, the previous version layer key to the data store; receiving, from the data store, a previous version layer data segment identified by the previous version layer key; and generating, at the client device, the index layer key based on values stored in the version layer data segment.

The version layer data segment may comprise: a first plurality of values configured to permit generation of the data layer key; and a second plurality of values configured to permit generation of the previous version layer key corresponding to a preceding version of the data stored in the data store.

Generating, at the client device, the data layer key may comprise generating, at the client device, a plurality of data layer keys. Receiving, from the data store, the data layer data segment may comprise receiving, from the data store, a plurality of data layer data segments, wherein each of the plurality of data layer data segments is identified by a respective one of the plurality of data layer keys.

The data layer data segment received from the data store may be in a compressed format, and the method may further comprise decompressing, at the client device, the data layer data segment. Decompressing the data layer data segment at the client device reduces the size of the data transferred between the data store and the client device.

According to a third aspect of the present disclosure, there is provided a computer-implemented method, comprising: receiving, at a key-value value data store in communication with a remote client device over a network: a first data layer key-value pair comprising: a first data segment; and a unique first data layer key generated based on values stored in the first data segment; wherein the first data layer key uniquely identifies the first data segment; and a first reference layer key-value pair comprising: a first reference layer data segment storing a plurality of values configured to permit generation of the first data layer key; and a reference layer key; and storing, at the data store, the first data layer key-value pair and the first reference layer key-value pair.

The computer-implemented method may further comprise: receiving, at the data store, a first version layer key-value pair comprising: a first version layer data segment storing a plurality of values configured to permit generation of the first data layer key; and a unique first version layer key generated based on values stored in the first version layer data segment, wherein the first version layer key uniquely identifies the first version layer data segment; wherein the plurality of values stored in the first reference layer data segment is configured to permit generation of the first data layer key by being configured to permit generation of the first version layer key.

The computer-implemented method may further comprise: receiving, at the data store, a first index layer key-value pair comprising: a first index layer data segment storing a plurality of values configured to permit generation of the first data layer key; and a unique first index layer key generated based on values stored in the first index layer data segment, wherein the first index layer key uniquely identifies the first index layer data segment; wherein the plurality of values stored in the first reference layer data segment is configured to permit generation of the first data layer key by being configured to permit generation of the first index layer key.

The computer-implemented method may further comprise: receiving, at the data store, a first version layer key-value pair comprising: a first version layer data segment storing a plurality of values configured to permit generation of the first index layer key; and a unique first version layer key generated based on values stored in the first version layer data segment, wherein the first version layer key uniquely identifies the first version layer data segment; wherein the plurality of values stored in the first reference layer data segment is configured to permit generation of the first index layer key by being configured to permit generation of the first version layer key.

Receiving, at the data store, the first data layer key may comprise receiving a plurality of first data layer keys, wherein each of the plurality of first data layer keys is generated based on values stored in a respective one of a plurality of first data segment chunks into which the first data segment has been divided, and wherein the first index layer data segment stores a plurality of values configured to permit the generation of each of the plurality of first data layer keys.

Receiving, at the data store, the first key-value pair may comprise receiving a compressed first data segment from the client device.

The computer-implemented method may further comprise: receiving, at the data store: a second data layer key-value pair comprising: a second data segment; and a unique second data layer key generated based on values stored in the second data segment; wherein the second data layer key uniquely identifies the second data segment; and a second reference layer key-value pair comprising: a second reference layer data segment storing a plurality of values configured to permit generation of the second data layer key; and the reference layer key; and storing, at the data store, the second data layer key-value pair and the second reference layer key-value pair.

The computer-implemented method may further comprise: receiving, at the data store, a second version layer key-value pair comprising: a second version layer data segment storing: a first plurality of values configured to permit generation of the second data layer key; and a second plurality of values configured to permit generation of the first version layer key; and a unique second version layer key generated based on values stored in the second version layer data segment, wherein the second version layer key uniquely identifies the second version layer data segment; wherein the plurality of values stored in the second reference layer data segment is configured to permit generation of the second data layer key by being configured to permit generation of the second version layer key.

According to a fourth aspect of the present disclosure, there is provided a computer-implemented method, comprising: receiving, at a key-value data store in communication with a remote client device over a network, a reference layer key from the client device; sending, from the data store, a first reference layer data segment uniquely identified by the reference layer key; receiving, from the client device, a unique first data layer key generated based on values stored in the reference layer data segment; and sending, from the data store, a first data layer data segment uniquely identified by the first data layer key.

The computer-implemented method may further comprise: receiving, from the client device, a unique first version layer key generated based on values stored in the reference layer data segment; and sending, from the data store, a first version layer data segment uniquely identified by first version layer key; wherein the first data layer key is generated based on values stored in the version layer data segment.

The computer-implemented method may further comprise: receiving, from the client device, a unique first index layer key generated based on values stored in the reference layer data segment; and sending, from the data store, a first index layer data segment uniquely identified by first index layer key; wherein the first data layer key is generated based on values stored in the index layer data segment.

The computer-implemented method may further comprise: receiving, from the client device, a unique first version layer key generated based on values stored in the reference layer data segment; and sending, from the data store, a first version layer data segment uniquely identified by first version layer key; wherein the first index layer key is generated based on values stored in the version layer data segment.

According to a fifth aspect of the present disclosure, there is provided a computer-readable medium comprising computer-executable instructions which, when executed by one or more processors of a device, cause the device to carry out the method of any of the first to fourth aspects. In particular, there is provided a first computer-readable medium comprising computer-executable instructions which, when executed by one or more processors of a first device, cause the first device to carry out the method of the first and/or second aspects, and a second computer-readable medium comprising computer-executable instructions which, when executed by one or more processors of a second device, cause the second device to carry out the method of the third and/or fourth aspects.

According to a sixth aspect of the present disclosure, there is provided a computer program comprising computer-executable instructions which, when executed by one or more processors of a device, cause the device to carry out the method of any of the first to fourth aspects. In particular, there is provided a first computer program comprising computer-executable instructions which, when executed by one or more processors of a first device, cause the first device to carry out the method of the first and/or second aspects, and a second computer program comprising computer-executable instructions which, when executed by one or more processors of a second device, cause the second device to carry out the method of the third and/or fourth aspects.

According to a seventh aspect of the present disclosure, there is provided a device comprising one or more processors configured to perform the method of any of the first to fourth aspects. In particular, there is provided a first device comprising one or more processors configured to perform the method of the first and/or second aspects, and a second device comprising one or more processors configured to perform the method of the third and/or fourth aspects.

### BRIEF DESCRIPTION OF FIGURES

Specific embodiments are described below by way of example only and with reference to the accompanying drawings, in which:
FIG. 1 shows a schematic diagram of an existing database system including a database management server.
FIG. 2 shows a schematic diagram of a database system according to the present disclosure.
FIG. 3 shows a schematic diagram of a data structure according to the present disclosure.
FIGS. 4A and 4B show a sequence diagram of a process of writing data to a data store.
FIG. 4C shows an example of a first index layer data segment.
FIGS. 5A to 5C show a sequence diagram of a process of writing additional data to the data store.
FIG. 5D shows an example of a second index layer data segment.
FIGS. 6A to 6C show a sequence diagram of a process of reading data from the data store.
FIG. 7 shows a flow diagram of a method, implemented at a client device, of writing data to the data store.
FIG. 8 shows a flow diagram of a method, implemented at a client device, of reading data from the data store.
FIG. 9 shows a flow diagram of a method, implemented at a data store, of storing data in the data store.
FIG. 10 shows a flow diagram of a method, implemented at a data store, of returning data stored in the data store.
FIG. 11 shows a schematic diagram of a device configured to implement the methods of the present disclosure.

### DETAILED DESCRIPTION

### Overview

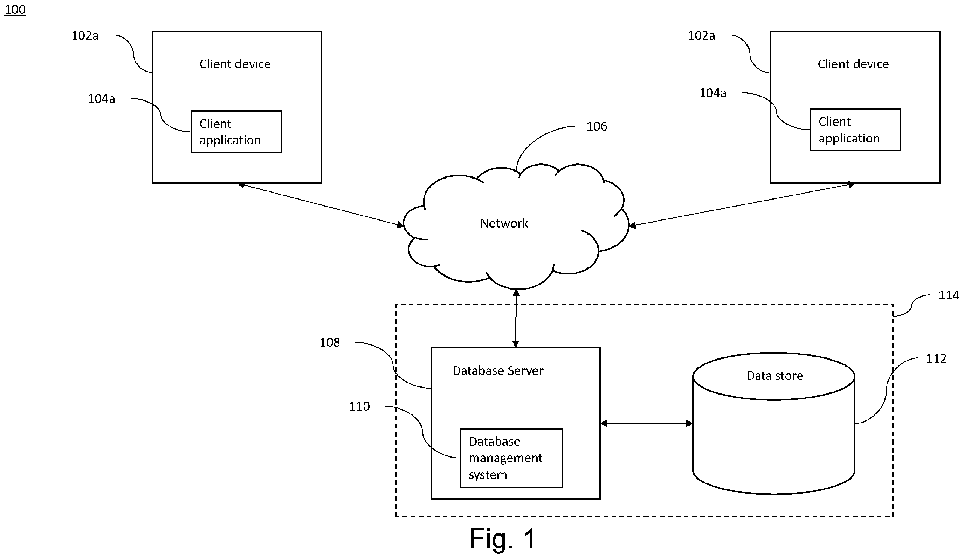

FIG. 1 shows an overview of an existing database system environment 100 that includes a database management system 110 implemented at a database server 108. In the database system environment 100 shown in FIG. 1, client devices 102 (e.g. client devices 102a and 102b shown in FIG. 1) communicate with a database system 114 over a network 106. Client applications 104 (e.g. client applications 104a and 104b shown in FIG. 1) are executed on each client device 102 to allow a user of the client device 102 to interface with the database system 114.

The database system 114 comprises the database server 108, which executes the database management system 110. The database system 114 also comprises a data store 112, in which data is stored. The database server 108 communicates with the client devices 102 over the network 106 in order to process database queries from the client devices 102 relating to the data stored in the data store 112. In particular, the database management system 110 controls access to the data store 112 and determines how to plan and execute queries from the client devices 102.

As explained above, the use of the database server 108 introduces cost into the database system 114 in terms of operational cost, computational resources and energy usage. The use of the database server 108 also introduces latency into the database system 114, which can be a particular issue when client devices 102 are accessing time-sensitive data stored in the data store 112. Moreover, the database server 108 has the potential to become overloaded when many client devices 102 are seeking to access data within a short time period.

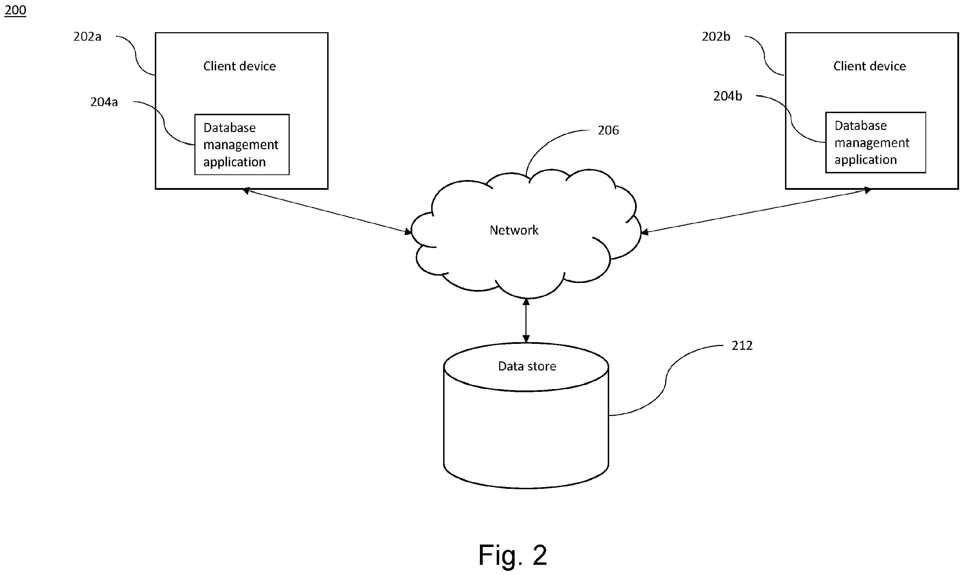

FIG. 2 shows an overview of a database system environment 200 according to the present disclosure. In contrast to the database system environment 100 shown in FIG. 1, the database system environment 200 is 'serverless', meaning that no database server is required in order to handle queries from client devices 202 relating to data stored in a data store 212. This 'serverless' capability is provided by the implementation of database management applications 204 (e.g. database management applications 204a and 204b shown in FIG. 2), which are executed on the client devices 202 (e.g. client devices 202a and 202b) and allow the client devices 202 to interface directly with the data stored in the data store 212.

In the system environment 200 shown in FIG. 2, the data store 212 is a key-value data store. The client devices 202 communicate directly with the key-value data store 212 over a network 206. A key-value data store is a data store in which data is stored as key-value pairs (also referred to herein as 'objects'). Each key-value pair includes a data segment storing values (e.g. the data itself), and a unique identifier of the data segment, known as a key. Examples of suitable key-value data stores 212 include the Amazon S3 service available from Amazon Web Services of Seattle, WA, USA, and the MongoDB database program available from MongoDB, Inc. of New York, NY, USA. Other key-value data stores will be apparent to the skilled person.

As described in more detail below, the database management applications 204 allow users of the respective client devices 202 to write data to the data store 212 and to read data from the data store 212. In particular, the database management application 204 is capable of generating unique keys that uniquely identify data segments to be stored in the data store 212. This means that a data segment can be written directly to the data store 212 by the database management application 204, as part of a key-value pair together with a unique key generated by the database management application 204. Similarly, the database management application 204 is capable of generating, from retrieved data segments, unique keys that uniquely identify other data segments stored in the data store 212. This means that a data segment can be read directly from the data store 212 by the database management application 204, using a unique key generated by the database management application 204.

It will be appreciated that some processing functionality is required at the data store 212, in order to provide data segments to the client devices 202. However, in contrast to the database server 108 shown in FIG. 1, the processing functionality of the data store 212 is limited to storing key-value pairs received from the client devices 202, retrieving data segments associated with keys received from the client devices 202, returning the retrieved data segments to the client devices 202 over the network 206, and optionally listing keys stored in the data store 212. Consequently, no server functionality is required in order to resolve and process queries from client devices 202 in order to read data from, and write data to, the data store 212.

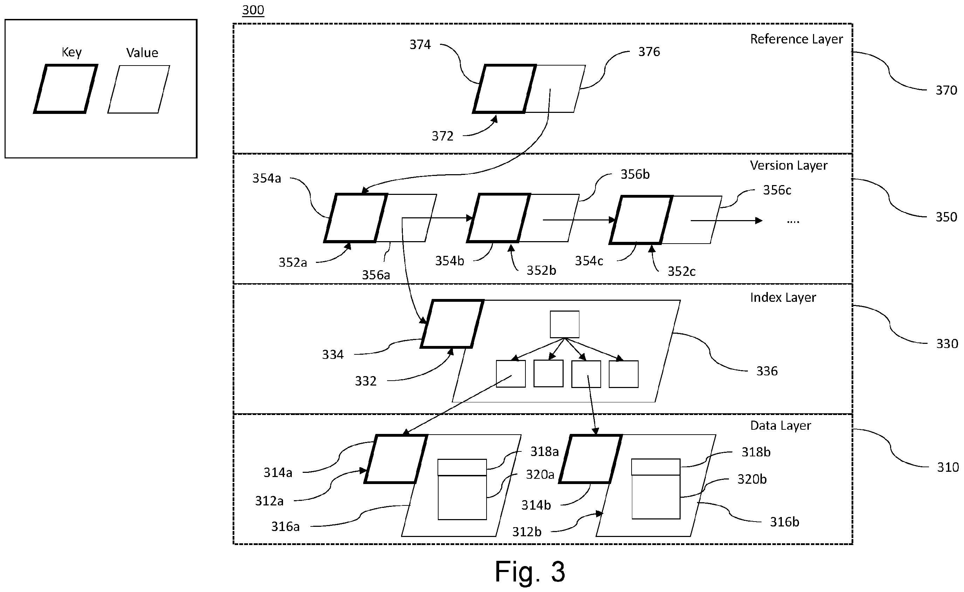

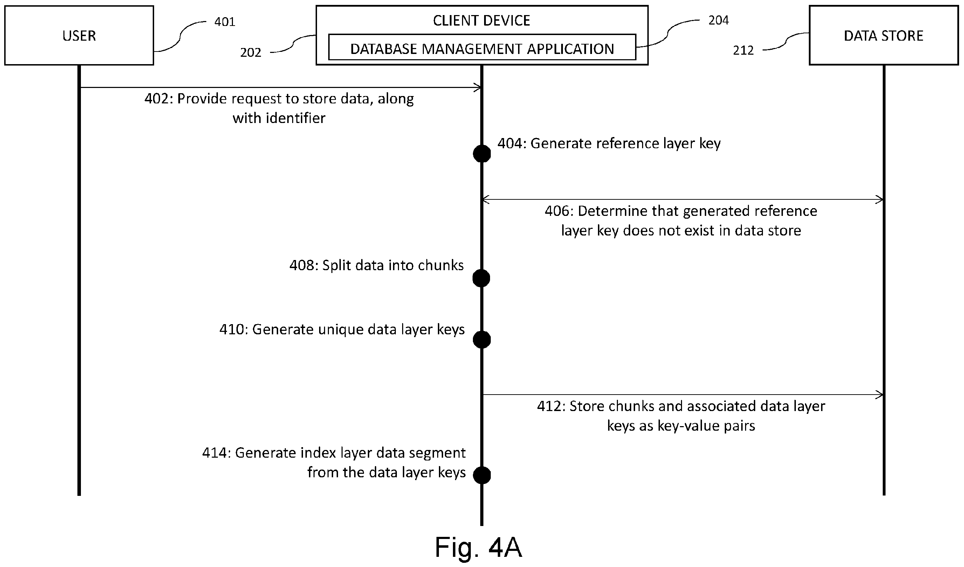

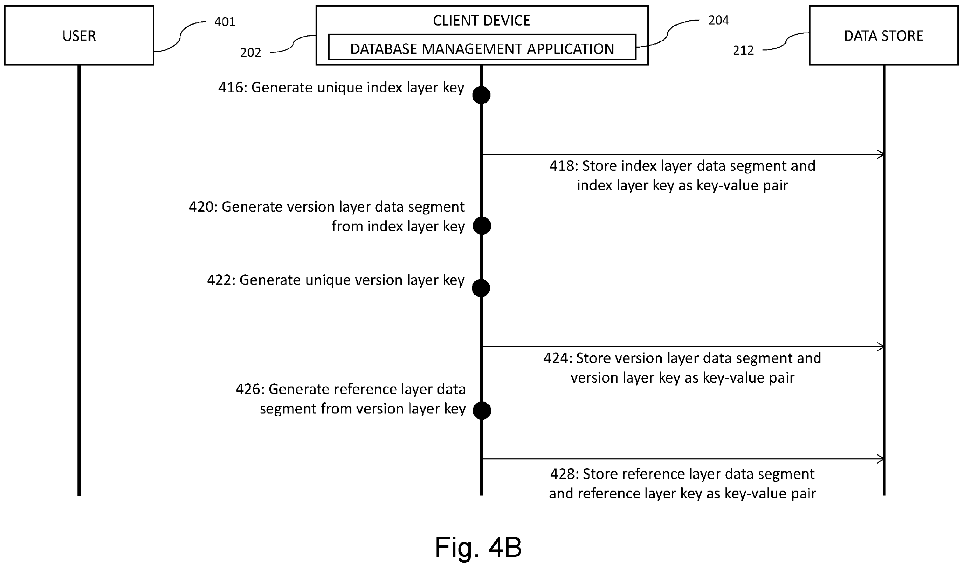

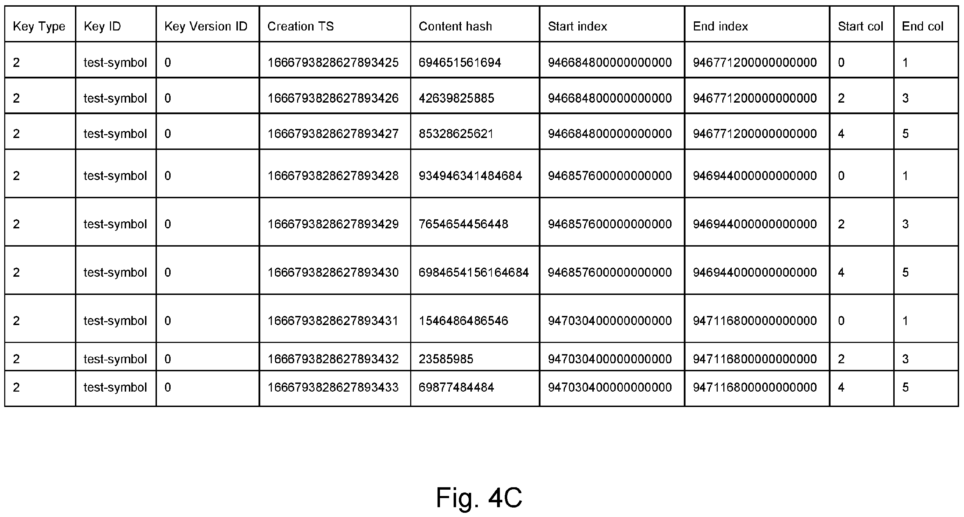

The generation, by the database management application 204, of the keys required to read data from, and write data to, the data store 212 is explained in more detail below with reference to FIGS. 3 and 4. A particular feature of the database system environment 200, however, is that a first version of data in the data store 212 is not overwritten when a second version of the data is stored in the data store 212. Instead, a subsequent write to the data store 212 involves generating a unique key that uniquely identifies the second version of the data, and sending the unique key and the second version of the data to the data store 212 for storage as a key-value pair. Accordingly, the first version of the data in the data store 212 (which is also identified by a unique key) is not overwritten when writing the second version of the data to the data store 212. This is because the keys associated with the first and second versions of the data are unique. In other words, when generating a key that uniquely identifies the second version of the data, the database management application 204 will not generate the same key that it generated for storing the first version of the data. The uniqueness of the keys may be achieved, for example, by incorporating timestamps into the keys (meaning that a key generated for storing the second version of the data has a later timestamp than a key generated for storing the first version of the data).

Given that the first version of the data is not overwritten, data stored in the data store 212 is immutable. The first version of the data can always be accessed by the database management application 204, provided that the database management application 204 provides the unique key that uniquely identifies the first version of the data.

To access data in the data store 212, the database management application 204 generates a reference layer key, and reads a reference layer data segment associated with the reference layer key. The reference layer data segment stores the values needed to generate the unique data layer key needed to access the data that a user of the database management application 204 wishes to retrieve (optionally via generation of one or more unique version layer keys and a unique index layer key).

When the database management application 204 receives a request to store the first version of the data in the data store 212, a unique first data layer key is generated by the database management application 204, and the database management application 204 sends the first version of the data and the first data layer key for storage at the data store 212 as a first data layer key-value pair. A first reference layer data segment is then generated by the database management application 204 based on components of the first data layer key. The database management application 204 then sends the reference layer data segment and the reference layer key (generated by the database management application 204) for storage at the data store as a reference layer key-value pair.

When the database management application 204 receives a request to store a second version of the data in the data store 212, a unique second data layer data key is generated by the database management application 204, and the database management application 204 sends the second version of the data and the second data layer key for storage at the data store as a second data layer key-value pair. A second reference layer data segment is then generated by the database management application 204 based on components of the second data layer key. The database management application 204 then sends the reference layer data segment for storage at the data store, together with the same reference layer key used when storing the first version of the data. This means that the reference layer key uniquely identifies a reference layer data segment that stores values used for generating a key that uniquely identifies the latest version of the data.

Given that a reference layer key associated with a first version of data is only associated with a second version of data at the point at which the reference layer key and the second reference layer data segment are written to the data store 212, there is no conflict between reads and writes of the data in the data store 212. In particular, multiple client devices 202 can read a first version of the data while a second version of the data is being written to the data store 212. The version of the data accessed by the reading devices is dependent on the time at which the reference layer data segment is retrieved from the data store 212. Continuing the above example, if the reference layer data segment identified by the reference layer key is retrieved before the second reference layer data segment and reference layer key are written to the data store 212 as a reference layer key-value pair, then the version of the data accessed by a reading device will be the first version of the data. If the reference layer data segment is retrieved after the second reference layer data segment and reference layer key are written to the data store 212, then the version of the data accessed by the reading device will be the second version of the data.

It is not possible, therefore, for a reading device to retrieve partially written data, or to retrieve data that is in the process of being overwritten. In fact, a partial write of the data is not possible, because a later version of the data is only accessible by the database management application 204 once the reference layer data segment and the reference layer key have been written to the data store 212. It is also not necessary for any concurrency issues to be resolved at the data store 212, because if two client devices 202 attempt to write data to the data store 212 at the same time, then the latest version of the data in the data store 212 will simply be the version written by whichever client device 202 was last to write the reference layer key-value pair.

In summary, therefore, immutability of the data stored in the data store 212 means that there is no conflict between new writes to the data store 212 and existing reads of the data store 212, because existing key-value data in the data store 212 is not overwritten, and no requirement to resolve concurrency issues. Consequently, no server functionality is needed to resolve any conflict between existing reads and new writes, meaning that the database system environment 200 can be 'serverless', and is horizontally scalable across a large number of client devices 202. The immutability of the data stored in the data store 212 also means that older versions of the data can be accessed by client devices 202, by providing the unique keys that uniquely identify the older versions of the data.

Moreover, by using a reference layer key-value pair that identifies the latest version of the user-stored data, no mechanism for tracking the different versions of the user-stored data is needed. Instead, the reference key used to access the data simply needs to be updated so that it points to the reference layer data segment that stores the values needed for generating the key associated with the latest version of the data.

Accordingly, when reading data from the key-value data store 212, a client device 202 (i) requests the reference layer data segment associated with a particular (reference) key, (ii) generates a data layer key based on the values stored in the reference layer data segment returned by the data store 212, and (iii) requests the data layer data segment associated with the generated key, such data layer data segment storing values of the latest version of the data that the client device 202 is seeking to read.

The database system environment 200 therefore involves minimal processing in order for data to be read from the data store 212, meaning that data can be accessed from the data store 212 with low latency.

The data stored in the data store 212 can be split into silos that each store data, such as column-oriented data, row-oriented data or data otherwise oriented, associated with a distinct identifier, where data in each silo is independent of the data in the other silos and can be updated independently of the data in the other silos.

The database system environment 200 is particularly suitable for data with a relatively high number of 'reading' client devices 202 per silo, but a relatively low number of 'writing' client devices 202 per silo. One example of data that is particularly suited to the database system environment 200 is share price data, where each silo stores the share price associated with a particular stock, and is identified using an identifier associated with the identifier of that stock.

In such an example, an updated share price can be written to the silo associated with a particular stock by a client device 202, allowing numerous other client devices 202 to rapidly access (i.e. with low latency) the updated share price for the stock from the silo associated with that stock's identifier. Storing data in silos also reduces the likelihood of concurrent writes to data stored in a particular silo.

Although the key-value pairs mentioned herein are described as being associated with different 'layers', the layers referred to herein describe the hierarchy of the data structure used by the database management application 204, and are not intended to indicate that the data in one layer is stored in a different way or in a different location to the data in another layer.

### Data structure

FIG. 3 shows an example data structure 300 that allows the client devices 202 to interface directly with the data store 212. All data is stored in the data store 212 as a key-value pair, comprising a data segment storing values (for example, a table of columnar data), and an associated unique identifier, or key. The key uniquely identifies its associated data segment, meaning that the data segment of the key-value pair is returned from the data store 212 when the data store 212 is queried by the database management application 204 using a particular key.

As shown in FIG. 3, the data structure 300 includes four layers: a data layer 310, an index layer 330, a version layer 350, and a reference layer 370. Each of the layers of the data structure 300 will now be described in turn.

The data layer 310 stores the user-provided data itself. The user-provided data is stored as a data layer key-value pair 312, comprising a data layer key 314 and a data layer data segment 316. The data layer key 314 identifies the data layer data segment 316. The data layer data segment 316 comprises a segment header 318 (for example, column headers for the values stored in the data segment 316), and segment data 320 (i.e. the values themselves).

In the example shown in FIG. 3, the data is split into chunks of a particular size. Each chunk of data is stored as a data layer key-value pair 312. For example, a first chunk of data is stored as a first key-value data pair 312a, comprising a first data layer key 314a and a first data layer data segment 316a having a segment header 318a and segment data 320a, while a second chunk of data is stored as a second key-value data pair 312b, comprising a second data layer key 314b and a second data layer data segment 316b having a segment header 318b and segment data 320b.

Each chunk of data is therefore identified using a unique data layer key 314 (i.e. the first data layer key 314a for the first chunk, and the second data layer key 314b for the second chunk). Each unique data layer key 314 has a specific format that identifies the chunks of data. Specifically, each data layer key 314 includes the following fields: (i) a key type; (ii) a key identifier; (iii) a key version identifier; (iv) a creation timestamp; (v) a content hash; (vi) a start index; and (vii) an end index. The data layer key 314 may therefore take the following format, when used for retrieving data from the Amazon S3 data store:

```
[prefix] / [key type] / * [key code] * [key identifier]
* [key version identifier] * [creation timestamp]
 * [content hash] * [start index] * [end index]
```

The format of the data layer key 314 can, of course, be adapted in accordance with delimiters used for accessing data from other key-value data stores.

The prefix identifies a 'library' in which a plurality of identifiers is grouped, and is provided together with the key identifier (explained below) when a user of the client device 202 is seeking to read or write data. The prefix is used for interfacing with the Amazon S3 data store, and may not be required or implemented when retrieving data from other key-value data stores. That is, the prefix is an optional field that may not be required or implemented for the data layer key, index layer key, version layer key and reference layer key.

The key type is a value that identifies the data layer key 314 as being a key associated with the data layer 310. For example, data stored in the data layer 310 may be identified using a key with key type '2', associated with 'data'.

The key code is hard-coded into the database management application 204 and is therefore automatically generated when the database management application 204 generates the data layer key 314. The key code identifies the format of the key. For example, the key code may identify the way in which a key is serialised / tokenized, i.e. which character is used to delimit the fields of a key and the number of fields that are expected. For example, the key code may be 'sUt' or 'sTt'. While the asterisk character '*' is described herein for delimiting the fields of a key for use with the Amazon S3 data store, a different character may be used in other key-value data stores. The key code is an optional field that may not be required or implemented for the data layer key, index layer key, version layer key and reference layer key.

The key identifier is a value that identifies the silo of data within the data store 212 in which the data associated with the data layer key 314 is stored. For example, the key identifier may be 'symbol_01'.

The key version identifier is a value that identifies the version of the data in the data segment 316 associated with the data layer key 314. For example, the first version of the data stored in the silo of data associated with key identifier 'symbol_01' may be identified using a key version identifier '0', with successive versions of the data being identified using key version identifiers that are incremented by a value of one for each version.

The creation timestamp is a value that identifies the time at which the data layer key 314 was generated. The content hash is a hash value of the data segment 316 with which the data layer key 314 is associated. The start and end indices are values that identify the start and end rows of the chunk of data stored in the data segment 316. In some examples, the index is a time series, and the start and end indices are timestamps associated with the start and end points of the chunk of data.

It will be appreciated that at least the creation timestamp and content hash will be unique to each chunk of data (assuming that no chunks are identical). Accordingly, each chunk of data stored in a data segment 316 is identified by a unique data layer key 314.

The index layer 330 stores a further key-value pair, in the form of an index layer key value pair 332. The index layer key-value pair 332 comprises a unique index layer key 334 and an index layer data segment 336. The index layer key 334 identifies the index layer data segment 336. The index layer data segment 336 comprises a segment header having a number of column headings that correspond to the fields of the data layer keys 314. The index layer data segment 336 also comprises segment data that includes the values associated with each of the fields of the data layer keys 314.

For example, the index layer data segment 336 has columns for fields (i) to (vii) of the data layer key 314. The index layer data segment 336 also includes fields storing values identifying the start column and the end column of each chunk of data stored as a data segment 316. Identifying the columnar extent of each chunk allows for column-level filtering of the data layer data within the index layer data segment 336. Accordingly, the data layer data does not need to be retrieved from the data store 212 in order for filtering to be carried out. In addition, the index layer data segment 336 may also include a field identifying the number of rows in each chunk of data stored as a data segment 316 (although this is not shown in the example index layer data segment shown in FIG. 4C). Identifying the number of rows in each chunk of data stored as a data segment 316 allows for a determination of an amount of memory needed to read the data segment 316. The database management application 204 may keep a record of the start column, end column and number of rows when splitting the user's data into chunks, so that the relevant fields in the index layer data segment 336 can be populated.

From the values stored in the index layer data segment 336, each data layer key 314 can be generated. (The prefix can be determined from the information received from the user, while the key code can be inferred.) Accordingly, if the client device 202 has the index layer key 334, the index layer data segment 336 can be retrieved from the key-value data store 212. The client device 202 can then generate the data layer keys 314 corresponding to the data layer data segments 316 of interest, from the values stored in the index layer data segment 336. Once the data layer keys 314 have been generated, the data layer data segments 316 can be retrieved from the data store 212.

The index layer data segment 336 is identified by an index layer key 334, as explained above. The index layer key 334 has a format that is the same as the data layer key 314. Therefore, each index layer key 334 includes: (i) a key type; (ii) a key identifier; (iii) a key version identifier; (iv) a creation timestamp; (v) a content hash; (vi) a start index; and (vii) an end index.

The key type of the index layer key 334 may have a value '3', associated with 'index'. The key identifier of the index layer key 334 may be the same as the key identifier of the data layer keys 314 (e.g. 'symbol_01'). The key version identifier identifies the version of the data in the index layer segment 336 and, for the first data written to a particular silo, may have a value '0'. The creation timestamp identifies the time at which the index layer key 334 was generated. The content hash is a hash value of the index layer segment 336 with which the index layer key 334 is associated. The start and end indices are not used for the index layer key, and therefore have a value of '0'. In this instance, the value of '0' is selected as a default value for when the start and end indices are not used for a particular key, e.g. index layer key, version layer key. While the start and end indices are stated to have a value of '0', a different value may be used to denote that the start and end indices are not in use.

The version layer 350 stores further key-value pairs, in the form of version layer key value pairs 352. Each version layer key-value pair 352 comprises a unique version layer key 354 and a version layer data segment 356. The version layer key 354 identifies the version layer data segment 356. The version layer data segment 356 comprises a segment header having a number of headings that correspond to the fields of the index layer key 334. The version layer data segment 356 also comprises segment data that includes the values associated with each of the fields of the index layer key 334.

As shown in FIG. 3, the version layer 350 can include a number of version layer key-value pairs 352. Each version layer key-value pair 352 includes a version layer data segment 356 that includes the values associated with each of the fields of a particular version of an index layer key 334. For example, the version layer key-value pair 352a includes a version layer key 354a with version identifier *N* and a version layer data segment 356a that stores values from which the index layer key 334 with version identifier *N* can be generated. Similarly, the version layer key-value pair 352b includes a version layer key 354b with version identifier *(N - 1)* and a version layer data segment 356b that stores values from which an index layer key with version identifier *(N - 1)* can be generated. The version layer key-value pair 352c includes a version layer key 354c with version identifier *(N* - *2)* and a version layer data segment 356c that stores values from which an index layer key with version identifier *(N - 2)* can be generated. It will be appreciated that if *N* is equal to zero, version layer key-value pairs 352b and 352c would not be present. For conciseness, index layer key-value pairs having index layer keys with version identifiers *(N - 1)* and *(N - 2)* are not shown in FIG. 3.

The version layer data segment 356 is identified by a version layer key 354, as explained above. The version layer key 354 has the same format as the index layer key 334 (i.e. it includes: (i) a key type; (ii) a key identifier; (iii) a key version identifier; (iv) a creation timestamp; (v) a content hash; (vi) a start index; and (vii) an end index).

The key type of the version layer key 354 may have a value '4', associated with 'version'. The key identifier and key version identifier may be the same as for the index layer key 334. The creation timestamp identifies the time at which the version layer key 354 was generated. The content hash is a hash value of the version layer segment 356 with which the version layer key 354 is associated. The start and end indices are not used for the version layer key, and therefore have a value of '0'.

In addition to storing the values associated with each of the fields of a particular version (e.g. version *N*) of an index layer key 334, the version layer data segment 356 also stores values associated with each of the fields of the previous version (e.g. version *(N -* 1)) of the version layer key 354. As explained above, the version layer key 354 has the same format as the index layer key 334, meaning that the values for the fields of both keys can be stored in the same tabular format (i.e. in the version layer data segment 356).

Accordingly, from the values stored in the version layer data segment 356 associated with the version layer key 354a with key version identifier *N*, the client device 202 can generate: (i) the index layer key 334 with key version identifier *N*; or (ii) the version layer key 354b with key version identifier *(N* - *1)*. In case (ii), the client device 202 can then retrieve the version layer data segment 356b associated with the version layer key 354b with version identifier *(N - 1)*. The client device 202 can then generate: (i) the index layer key with key version identifier *(N - 1)*, and/or (ii) the version layer key 354c with key version identifier *(N - 2)*. Such a process can be repeated until the desired version of data from the data layer 310 is accessed.

It will be appreciated that if the data is not separated into chunks of data, then the index layer 330 may not be required. For example, if a client side constraint prevents data segments exceeding a particular size constraint from being stored in a particular silo, then no layer would be needed to identify the chunks of data. In such a situation, each version layer key-value pair 352 would include a version layer key 354 with version identifier *N* and a version layer data segment 356 that stores values from which the data layer key 314 with version identifier *N* can be generated.

Splitting the data into chunks of data does, however, provide the functionality to filter data at the index layer 330 when reading data, and the functionality to deduplicate data at the index layer 330 when writing data. Both of these aspects are explained in more detail below.

The reference layer 370 stores a further key-value pair, in the form of a reference layer key-value pair 372. The reference layer key-value pair 372 comprises a reference layer key 374 and a reference layer data segment 376. The reference layer key 374 identifies the reference layer data segment 376. The reference layer data segment 376 comprises a segment header having a number of headings that correspond to the fields of the version layer key 354. The reference layer data segment 376 also comprises segment data that includes the values associated with each of the fields of the latest version layer key 354 (specifically, in the example shown in FIG. 3, to the version layer key 354a).

The reference layer key 374 has a different format to the index and version layer keys. In particular, the reference layer key includes four parts: (i) a key prefix, (ii) a key type (e.g. 'ref' for reference key), (iii) a key code, and (iv) a key identifier. The key identifier is the same as the key identifiers of the lower layer keys (e.g. 'symbol_01' in the example discussed above), and the prefix and key code are also the same as in the lower layer keys. The reference layer key 374 can be generated upon receipt, at the client device 202, of a particular identifier associated with data stored in a particular silo of the data store 212. For example, a user of the client device 202 may input or select the identifier 'symbol_01', upon which the database management application 204 will generate the reference layer key 374 associated with the identifier 'symbol_01'.

The database management application 204 can use the generated reference layer key 374 to determine whether data associated with the inputted or selected identifier is stored in the data store 212. To do this, the database management application 204 attempts to retrieve the reference layer data segment 376 associated with the generated reference layer key 374. If no data segment is returned by the data store 212, then the database management application 204 determines that any data that it is writing to the data store 212 is the first version of the data for that identifier.

The reference layer data segment 376 is the only data that is overwritten when new data is stored in a particular silo. Accordingly, the reference layer data segment 376 stores mutable data. As explained above, the reference layer data segment 376 stores values associated with each of the fields of the latest version layer key 354. As one example, each of the data layer keys 314, index layer key 334 and version layer key 354 have the version identifier *(N - 1)*, prior to the data being updated. Accordingly, the reference layer data segment 376 includes the value of the version identifier *(N - 1)*. When new data is written to the data layer 310 (e.g. version *N* of the data), new instances of the data layer keys 314, index layer key 334 and version layer key 354 are generated, each with the version identifier *N.* Accordingly, in order to ensure that the version layer key 354 generated from the values stored in the reference layer data segment 376 is the correct (i.e. latest) version, the values of the reference layer data segment 376 need to be overwritten so that the reference layer key 374 identifies a reference layer data segment 376 that includes the values used to generate the version layer key 354 with version identifier *N.* Therefore, when the client device 202 generates the version layer key 354 from the values stored in the reference layer data segment 376, a version layer key 354 with version identifier *N* is generated, as opposed to a version layer key 354 with version identifier *(N* - *1)*.

The reference layer data segment 376 is identified by the reference layer key 374, which does not change over time. Accordingly, the value associated with the reference layer key-value pair 372 is a mutable value, which is updated with a new reference layer data segment 376 each time the data associated with a particular identifier is updated.

It will be appreciated that if access to previous versions of the data is not required, then the version layer 350 may not be required. In such a scenario, the reference layer data segment 376 may include the values needed for generating the index layer key 334 associated with the latest version of the data. As explained above, the index layer 330 is also optional, if constraints on the size of data segments ensure that no chunking of user-specified data is needed. In such a scenario, both the index layer 330 and the version layer 350 may not be required. In this case, the reference layer data segment 376 would include the values needed for generating the data layer key 314 associated with the latest version of the data. Implementing the version layer does, however, provide a mechanism for the database management application 204 to easily access previous versions of data.

Although the data structure 300 is described in terms of layers, the layers are simply intended to indicate the hierarchy of the key-value pairs, and are not intended to convey that the key-value pairs in different layers are stored in different locations in the data store 212. In particular, given that all components of the data structure 300 have the same basic structure (i.e. key-value pairs), all components of the data structure 300 can be stored in the data store 212 in the same manner (i.e. as key-value pairs).

### Writing initial data

FIGS. 4A and 4B show a sequence diagram of a process 400 of writing an initial version of data to the data store 212. The process 400 will be explained with reference to the following example data, which a user 401 of the client device 202 wishes to store in the data store 212:

| | col-1 | col-2 | col-3 | col-4 | col-5 | col-6 |
|---|---|---|---|---|---|---|
| 2000-01-01 | 0 | 10 | 20 | 30 | 40 | 50 |
| 2000-01-02 | 1 | 11 | 21 | 31 | 41 | 51 |
| 2000-01-03 | 2 | 12 | 22 | 32 | 42 | 52 |
| 2000-01-04 | 3 | 13 | 23 | 33 | 43 | 53 |
| 2000-01-05 | 4 | 14 | 24 | 34 | 44 | 54 |
| 2000-01-06 | 5 | 15 | 25 | 35 | 45 | 55 |

At 402, the user 401 provides a request to store the above data, along with an identifier (in this example, 'test_symbol'), and optionally a library identifier (or prefix) identifying a library in which the identifier is grouped with other identifiers (depending on the type of key-value data store).

At 404, the database management application 204 running on the client device 202 generates a reference layer key 374 based on the identifier provided by the user 401. For example, the database management application 204 may generate the following reference layer key 374:

```
 prefix/vref/*sUt*test-symbol
```

At 406, the database management application 204 determines that the generated reference layer key 374 does not exist in the data store 212. To do this, the database management application 204 attempts to retrieve the reference layer data segment 376 associated with the generated reference layer key 374. When no data segment is returned by the data store 212, the database management application 204 determines that any data that it is writing to the data store 212 is the first version of the data for the identifier 'test-symbol'. Accordingly, the database management application 204 determines that the keys that it generates to store the data are to have the key version identifier 0'.

At 408, the database management application 204 splits the data into chunks. For the purposes of illustration, the data is split into 2x2 data chunks in this example (meaning that there are nine data chunks). It will be appreciated, however, that significantly larger chunks of data are used in practice. The data is split into chunks in order to comply with data segment size constraints imposed by the data store 212. The following tables show the data layer data segments 316, once the user-provided dataframe has been split into chunks:

| | col-1 | col-2 |
|---|---|---|
| 2000-01-01 | 0 | 10 |
| 2000-01-02 | 1 | 11 |

| | col-3 | col-4 |
|---|---|---|
| 2000-01-01 | 20 | 30 |
| 2000-01-02 | 21 | 31 |

| | col-5 | col-6 |
|---|---|---|
| 2000-01-01 | 40 | 50 |
| 2000-01-02 | 41 | 51 |

| | col-1 | col-2 |
|---|---|---|
| 2000-01-03 | 2 | 12 |
| 2000-01-04 | 3 | 13 |

| | col-3 | col-4 |
|---|---|---|
| 2000-01-03 | 22 | 32 |
| 2000-01-04 | 23 | 33 |

| | col-5 | col-6 |
|---|---|---|
| 2000-01-03 | 2 | 52 |
| 2000-01-04 | 43 | 53 |

| | col-1 | col-2 |
|---|---|---|
| 2000-01-05 | 4 | 14 |
| 2000-01-06 | 5 | 15 |

| | col-3 | col-4 |
|---|---|---|
| 2000-01-05 | 24 | 34 |
| 2000-01-06 | 25 | 35 |

| | col-5 | col-6 |
|---|---|---|
| 2000-01-05 | 44 | 54 |
| 2000-01-06 | 45 | 55 |

At 410, the database management application 204 generates unique data layer keys 314 for each chunk of data (i.e. each data layer data segment 316). Each data layer key 314 is generated using: (i) key type 'data'; (ii) key identifier 'test-symbol'; (iii) key version identifier '0'; (iv) creation timestamp (e.g. in nanoseconds since the Unix epoch); (v) content hash, which is a unique identifier of the data in the chunk; (vi) start index, which is the first row that the chunk contains (e.g. 2000-01-03 for the sixth chunk above), which may also be expressed in nanoseconds since the Unix epoch; and (vii) end index, which is the last row that the chunk contains (e.g. 2000-01-04 for the sixth chunk above), which may also be expressed in nanoseconds since the Unix epoch.

For example, for the sixth chunk above, the following data layer key 314 may be generated:
prefix/tdata/*sTt*test-symbol*0*1666793828627893425*6984654156164684*946857600000000000*9469440000000 00000

In this example, nine data layer keys 314 are generated at 410 (one for each data chunk).

At 412, each data layer data segment 316 and its associated data layer key 314 are sent to the data store 212 as a key-value pair for storage in the data store 212. Sending the data layer data segments 316 to the data store 212 may comprise compressing, by the database management application 204, the data layer data segments 316 and sending the compressed data layer data segments 316 to the data store 212. At this point, the data store 212 stores nine data objects (i.e. nine data layer key-value pairs 312) associated with the user's data.

At 414, the database management application 204 generates an index layer data segment 336 from the data layer keys 314. The index layer data segment 336 includes a number of fields that store values allowing the data layer keys 314 to be generated. For example, the index layer data segment 336 includes fields for: (i) key type; (ii) key identifier; (iii) key version identifier; (iv) creation timestamp; (v) content hash; (vi) start index; and (vii) end index. The index layer data segment 336 also includes start column and end column fields, although these fields are not used for generation of the data layer keys 314 (instead, these fields are used for filtering data at the index layer level, and reconstructing larger user dataframes from chunks of data in data layer data segments 316). In this example, the index layer data segment 336 contains the data shown in FIG. 4C.

At 416, the database management application 204 generates a unique index layer key 334 for the index layer data segment 336. The index layer key 334 is generated using: (i) key type 'index'; (ii) key identifier 'test-symbol'; (iii) key version identifier '0'; (iv) creation timestamp (e.g. in nanoseconds since the Unix epoch); (v) content hash, which is a unique identifier of the data in the index layer data segment 336; (vi) start index, which is not used and is set to '0'; and (vii) end index, which is not used and is set to '0'. In this example, the following index layer key 334 may be generated:
prefix/tindex/*sTt*test-symbol*0*1666793828627893625*53698752255*0*0

At 418, the index layer data segment 336 and its associated index layer key 334 are sent to the data store 212 as a key-value pair for storage in the data store 212. At this point, the data store 212 stores nine data objects and one index object (i.e. a total of ten key-value pairs) associated with the user's data.

At 420, the database management application 204 generates a version layer data segment 356 from the index layer key 334. The version layer data segment 356 includes a number of fields that store values allowing the index layer key 334 to be generated. For example, the version layer data segment 356 includes fields for: (i) key type; (ii) key identifier; (iii) key version identifier; (iv) creation timestamp; (v) content hash; (vi) start index; and (vii) end index. In this example, the version layer data segment 356 contains the following data:

| Key Type | Key ID | Key Version ID | Creation TS | Content hash | Start index | End index |
|---|---|---|---|---|---|---|
| 3 | test-symbol | 0 | 1666793828627893625 | 53698752255 | 0 | 0 |

As the data being written to the identifier 'test-symbol' is the first version of data (i.e. with key version identifier '0'), the version layer data segment 356 does not include values allowing a previous version layer key 354 to be generated.

At 422, the database management application 204 generates a unique version layer key 354 for the version layer data segment 356. The version layer key 354 is generated using: (i) key type 'index'; (ii) key identifier 'test-symbol'; (iii) key version identifier '0'; (iv) creation timestamp (e.g. in nanoseconds since the Unix epoch); (v) content hash, which is a unique identifier of the data in the version layer data segment 356; (vi) start index, which is not used and is set to '0'; and (vii) end index, which is not used and is set to '0'. In this example, the following version layer key 354 may be generated:
prefix/ver/*sUt*test-symbol*0*1666793828627893825*123985685558*0*0

At 424, the version layer data segment 356 and its associated version layer key 354 are sent to the data store 212 as a key-value pair for storage in the data store 212. At this point, the data store 212 stores nine data objects, one index object, and one version object (i.e. a total of eleven key-value pairs) associated with the user's data.

At 426, the database management application 204 generates a reference layer data segment 376 from the version layer key 354. The reference layer data segment 356 includes a number of fields that store values allowing the version layer key 354 to be generated. For example, the reference layer data segment 376 includes fields for: (i) key type; (ii) key identifier; (iii) key version identifier; (iv) creation timestamp; (v) content hash; (vi) start index; and (vii) end index. In this example, the reference layer data segment 376 contains the following data:

| Key Type | Key ID | Key Version ID | Creation TS | Content hash | Start index | End index |
|---|---|---|---|---|---|---|
| 4 | test-symbol | 0 | 1666793828627893825 | 123985685558 | 0 | 0 |

At 428, the reference layer data segment 376 and the reference layer key 374 generated at 404 are sent to the data store 212 as a key-value pair for storage in the data store 212. In total, therefore, the data store 212 stores nine data objects, one index object, one version object and one reference object (i.e. a total of twelve key-value pairs) associated with the user's data.

### Writing a new version of data

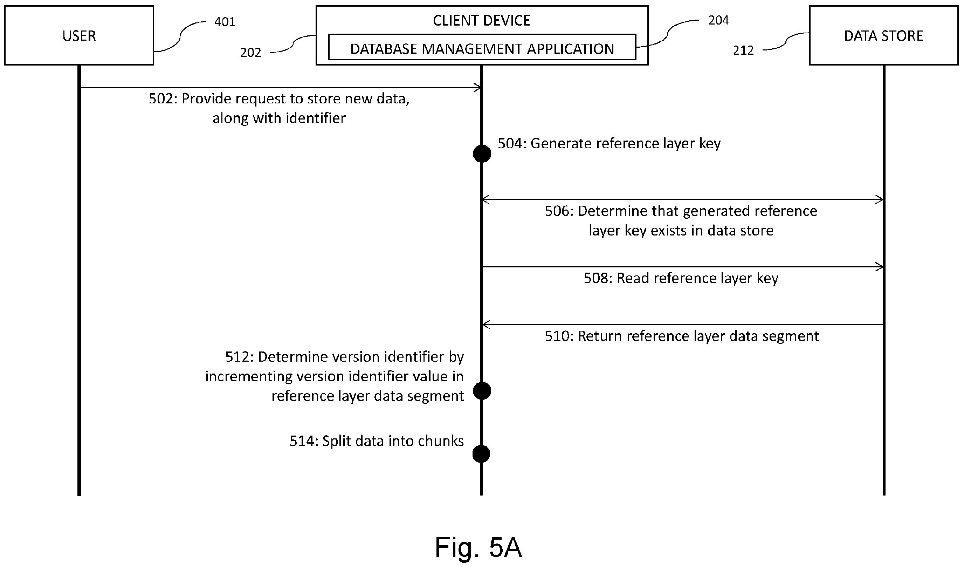

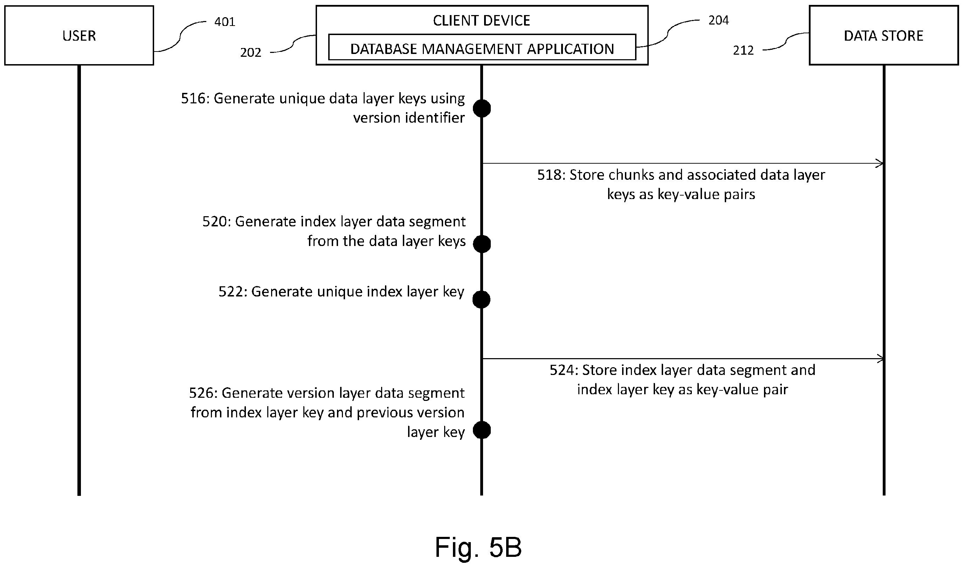

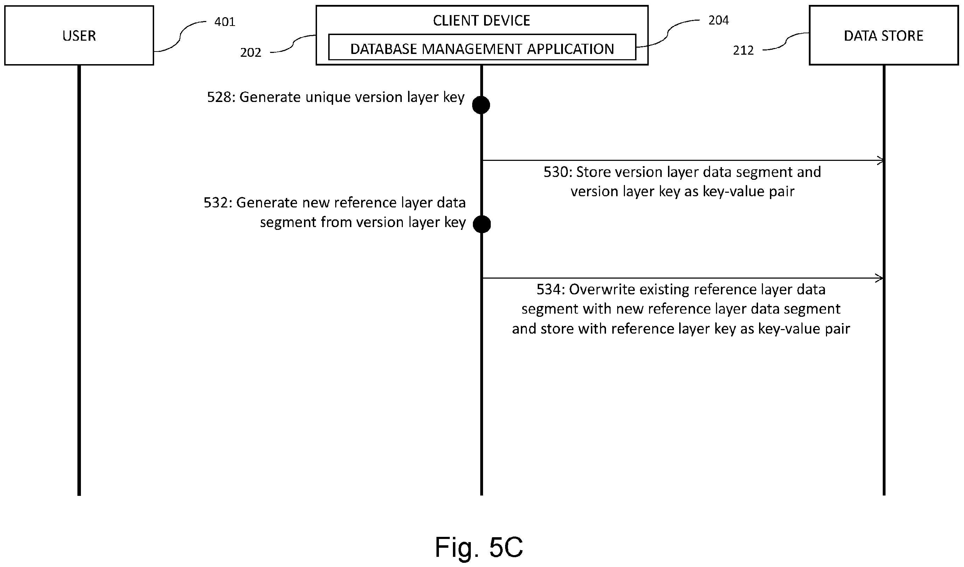

FIGS. 5A to 5C show a sequence diagram of a process 500 of writing a subsequent version of data to the data store 212. The process 500 will be explained with reference to the example additional data shown in the table below. The example additional data shown below is a new version of the data written to the data store 212 at process 400. The user 401 of the client device 202 wishes to store the additional data in the data store 212.

| | col-1 | col-2 | col-3 | col-4 | col-5 | col-6 |
|---|---|---|---|---|---|---|
| 2022-06-01 | 100 | 110 | 120 | 130 | 140 | 150 |
| 2022-06-02 | 101 | 111 | 121 | 131 | 141 | 151 |

At 502, the user 401 provides a request to store the above data, along with the identifier of the data stored at process 400 (in this example, 'test_symbol'), and optionally a library identifier or 'prefix'.

At 504, the database management application 204 running on the client device 202 generates a reference layer key 374 (e.g. prefix/vref/*sUt*test-symbol) based on the identifier provided by the user 401.

At 506, the database management application 204 determines that the generated reference layer key 374 exists in the data store 212. To do this, the database management application 204 attempts to retrieve the reference layer data segment 376 associated with the generated reference layer key 374. When the reference layer data segment 376 is returned by the data store 212, the database management application 204 determines that a version of data for the identifier 'test-symbol' is already stored in the data store 212.

At 508, the database management application 204 requests to read the reference layer data segment 376 associated with the generated reference layer key 374. At 510, the data store 212 returns the reference layer data segment 376 to the client device 202. For example, the data store 212 may return the following reference layer data segment 376 (which is the reference layer data segment 376 generated at 426 in process 400):

| Key Type | Key ID | Key Version ID | Creation TS | Content hash | Start index | End index |
|---|---|---|---|---|---|---|
| 4 | test-symbol | 0 | 1666793828627893825 | 123985685558 | 0 | 0 |

At 512, the database management application 204 identifies from the reference layer data segment 376 that the key version identifier is '0', meaning that the newest live version of the data is version '0'. The database management application 204 therefore determines that it is writing the next version of the data, and increments the version identifier to '1'. The database management application 204 will therefore use the version identifier '1' when generating the keys associated with the data segments that it is writing to the data store 212.

At 514, the database management application 204 splits the additional data into chunks. Again, for illustrative purposes, 2x2 data chunks are considered, meaning that the following data layer segments 316 are generated:

| | col-1 | col-2 |
|---|---|---|
| 2022-06-01 | 100 | 110 |
| 2022-06-02 | 101 | 111 |

| | col-3 | col-4 |
|---|---|---|
| 2022-06-01 | 120 | 130 |
| 2022-06-01 | 121 | 131 |

| | col-5 | col-6 |
|---|---|---|
| 2022-06-01 | 140 | 150 |
| 2022-06-01 | 141 | 151 |

At 516, the database management application 204 generates unique data layer keys 314 for each chunk of additional data (i.e. each data layer data segment 316), meaning that three data layer keys 314 are generated. The data layer keys 314 are generated in the same way as at 410 of process 400, except that a key version identifier '1' is used in the keys. For example, for the second chunk above, the following data layer key 314 may be generated:
prefix/tdata/*sTt*test-symbol*1*1666793828627894425*86325858525*1654038000000000000*16541244000000000 00

At 518, each data layer data segment 316 and its associated data layer key 314 are sent to the data store 212 as a key-value pair for storage in the data store 212. Sending the data layer data segments 316 to the data store 212 may comprise compressing, by the database management application 204, the data layer data segments 316 and sending the compressed data layer data segments 316 to the data store 212. At this point, the data store 212 stores twelve data objects (i.e. nine version '0' data layer key-value pairs 312, and three version '1' data layer key-value pairs 312), one index object, one version object and one reference object associated with the user's data.

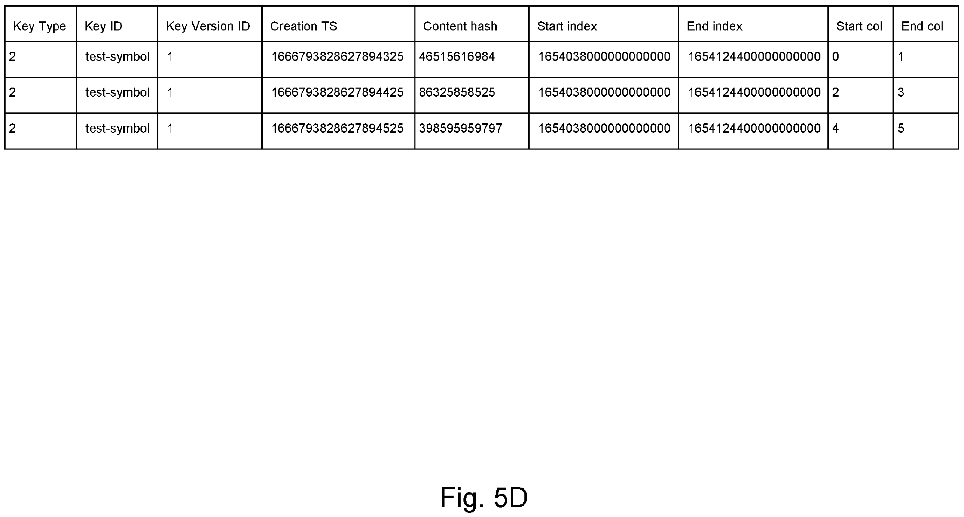

At 520, the database management application 204 generates an index layer data segment 336 from the data layer keys 314 in the same way as at 414 of process 400. In this example, the index layer data segment 336 contains the data shown in FIG. 5D.

At 522, the database management application 204 generates a unique index layer key 334 for the index layer data segment 336 in the same way as at 416 of process 400, except that a key version identifier '1' is used. In this example, the following index layer key 334 may be generated:
prefix/tindex/*sTt*test-symbol*1*1666793828627993625*742565494651*0*0

At 524, the index layer data segment 336 and its associated index layer key 334 are sent to the data store 212 as a key-value pair for storage in the data store 212. At this point, the data store 212 stores a total of sixteen key-value pairs associated with the user's data: twelve data layer key-value pairs 312; two index layer key-value pairs 332; one version layer key-value pair 352; and one reference layer key-value pair 372.

At 526, the database management application 204 generates a version layer data segment 356 from the index layer key 334. The version layer data segment 356 includes a number of fields that store values allowing both the version '1' index layer key 334 and the version '0' version layer key 354 to be generated. This can be achieved because the index layer key 334 and the version layer key 354 have the same format. As with the preceding example, the version layer data segment 356 includes fields for: (i) key type; (ii) key identifier; (iii) key version identifier; (iv) creation timestamp; (v) content hash; (vi) start index; and (vii) end index. In this example, the version layer data segment 356 contains the following data:

| Key Type | Key ID | Key Version ID | Creation TS | Content hash | Start index | End index |
|---|---|---|---|---|---|---|
| 3 | test-symbol | 1 | 1666793828627993625 | 742565494651 | 0 | 0 |
| 4 | test-symbol | 0 | 1666793828627893825 | 123985685558 | 0 | 0 |

It can be seen that the second row of the table above is the same as the first row of the reference layer data segment 376 generated at 426 of process 400.

At 528, the database management application 204 generates a unique version layer key 354 for the version layer data segment 356, in the same way as at 422 of process 400, except that a key version identifier '1' is used. In this example, the following version layer key 354 may be generated:
prefix/ver/*sUt*test-symbol*1*1666793828628893825*598945646984*0*0

At 530, the version layer data segment 356 and its associated version layer key 354 are sent to the data store 212 as a key-value pair for storage in the data store 212. At this point, the data store 212 stores a total of seventeen key-value pairs associated with the user's data: twelve data layer key-value pairs 312; two index layer key-value pairs 332; two version layer key-value pairs 352; and one reference layer key-value pair 372.

At 532, the database management application 204 generates a new reference layer data segment 376 from the version layer key 354. The version '1' reference layer data segment 376 is generated in the same way as the version '0' reference layer data segment 376 generated at 426 of process 400. In this example, the reference layer data segment 376 contains the following data:

| Key Type | Key ID | Key Version ID | Creation TS | Content hash | Start index | End index |
|---|---|---|---|---|---|---|
| 4 | test-symbol | 1 | 1666793828628893825 | 598945646984 | 0 | 0 |

At 534, the version '1' reference layer data segment 376 and the reference layer key 374 generated at 504 are sent to the data store 212 as a key-value pair for storage in the data store 212. This effectively overwrites the version '0' reference layer data segment 376 generated at 426 of process 400, because the reference layer key 374 (which is identical to the reference layer key 374 used in process 400) now identifies the version '1' reference layer data segment 376, rather than the version '0' reference layer data segment 376.

In total, therefore, the data store 212 stores a total of seventeen key-value pairs associated with the user's data: twelve data layer key-value pairs 312; two index layer key-value pairs 332; two version layer key-value pairs 352; and one reference layer key-value pair 372.

### Reading data

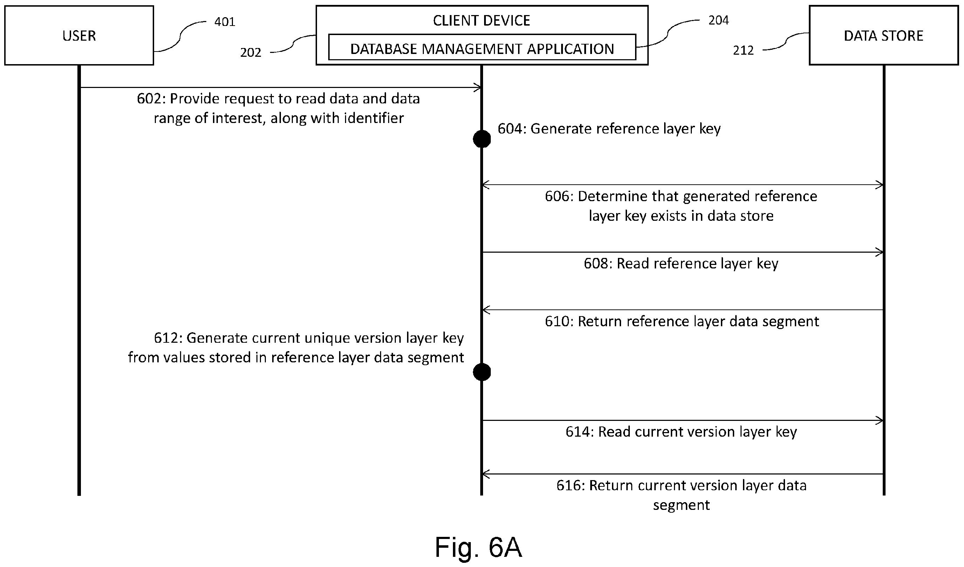

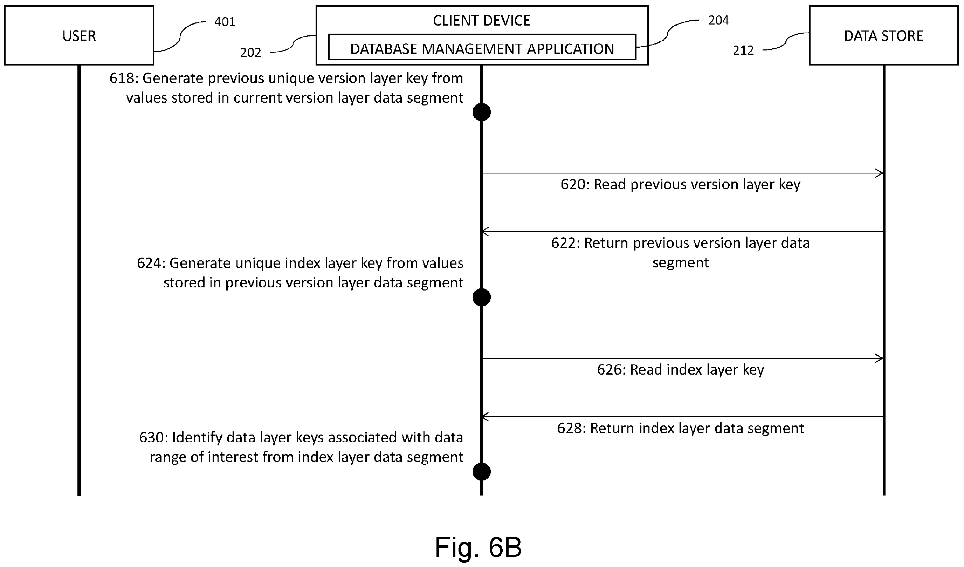

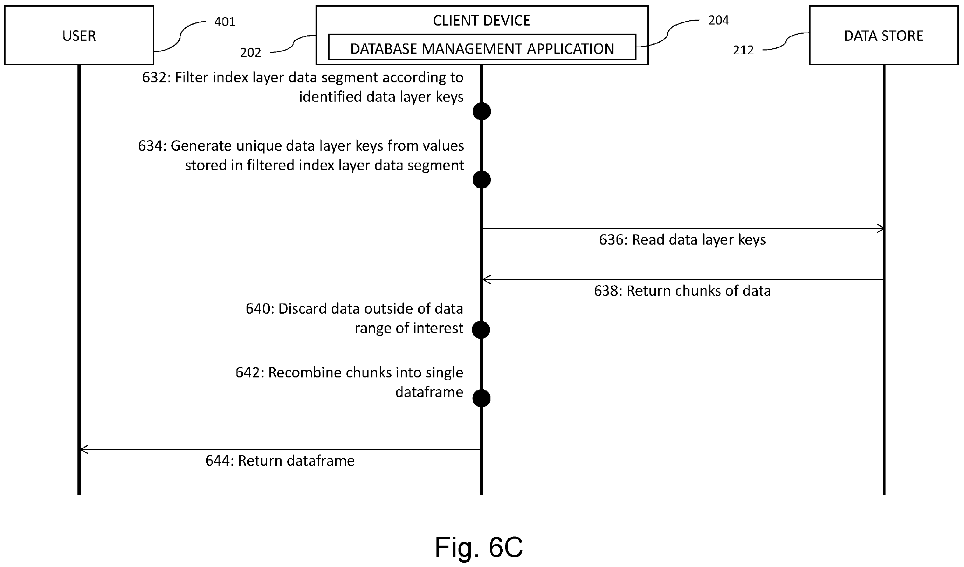

FIGS. 6A to 6C show a sequence diagram of a process 600 of reading a user-specified range of data from the data store 212. This example is described with reference to the data stored under identifier 'test-symbol' following process 500. In this example, a user wishes to read data from version '0' of the data.

At 602, the user 401 provides a request to read a specific data range of a version of data associated with an identifier, and optionally a library identifier or 'prefix'. In this example, the identifier is 'test-symbol', and the user 401 wishes to read columns 'col-2' and 'col-5' and rows in the date range '2000-01-02' to '2000-01-03' (inclusive) from version '0' of the data.

At 604 to 610, the database management application 204 generates a reference layer key 374, determines that the generated reference layer key 374 exists in the data store 212, requests to read the reference layer data segment 376 associated with the reference layer key 374 from the data store 212, and receives from the data store 212 the reference layer data segment 376. These steps are carried out in the same way as at 504 to 510 of process 500, except that the version '1' reference layer data segment 376 is returned by the data store. In this example, the returned reference layer data segment 376 includes the following data:

| Key Type | Key ID | Key Version ID | Creation TS | Content hash | Start index | End index |
|---|---|---|---|---|---|---|
| 4 | test-symbol | 1 | 1666793828628893825 | 598945646984 | 0 | 0 |

At 612, the database management application 204 generates a unique version '1' version layer key 354 from the values stored in the reference layer data segment 376. In this example, the database management application 204 reads the values from the reference layer data segment 376 to generate the following version layer key 354:
prefix/ver/*sUt*test-symbol*1*1666793828628893825*598945646984*0*0

At 614, the database management application 204 requests to read the version layer data segment 356 associated with the generated version '1' version layer key 354 from the data store 212. At 616, the data store 212 returns the version '1' version layer data segment 356. In this example, the version '1' version layer data segment 356 includes the following values:

| Key Type | Key ID | Key Version ID | Creation TS | Content hash | Start index | End index |
|---|---|---|---|---|---|---|
| 3 | test-symbol | 1 | 1666793828627993625 | 742565494651 | 0 | 0 |
| 4 | test-symbol | 0 | 1666793828627893825 | 123985685558 | 0 | 0 |

It can be seen that this is the same as the version layer data segment 356 generated at 526 of process 500.

In this example, the user has specified that they would like to read data from version '0' of the data, rather than version '1'. Accordingly, the database management application 204 generates, at 618, a unique version '0' version layer key 354 from the values stored in the version '1' version layer data segment 356. In this example, the database management application 204 reads the values from the version '1' version layer data segment 356 to generate the following version layer key 354:
prefix/ver/*sUt*test-symbol*0*1666793828627893825*123985685558*0*0

Then, at 620, the database management application 204 requests to read the version layer data segment 356 associated with the generated version '0' version layer key 354 from the data store 212. At 622, the data store 212 returns the version '0' version layer data segment 356. In this example, the version '0' version layer data segment 356 includes the following values:

| Key Type | Key ID | Key Version ID | Creation TS | Content hash | Start index | End index |
|---|---|---|---|---|---|---|
| 3 | test-symbol | 0 | 1666793828627893625 | 53698752255 | 0 | 0 |

It can be seen that this is the same as the version layer data segment 356 generated at 420 of process 400.

At 624, the database management application 204 generates a unique index layer key 334 from the values stored in the version '0' version layer data segment 356. In this example, the database management application 204 reads the values from the version '0' version layer data segment 356 to generate the following index layer key 334:
prefix/tindex/*sTt*test-symbol*0*1666793828627893625*53698752255*0*0

At 626, the database management application 204 requests to read the index layer data segment 336 associated with the generated index layer key 334 from the data store 212. At 628, the data store 212 returns the index layer data segment 336 (which, in this example, stores the data shown in FIG. 4C).

At 630, the database management application 204 identifies the data layer keys 314 associated with the data range of interest, from the data stored in the index layer data segment 336. The database management application 204 can identify the data range of interest at the index layer (i.e. from the index layer data segment 336), because the index layer data segment 336 stores the start and end indices of the data chunks, along with the start and end columns of the data chunks.

At 632, the database management application 204 filters the data stored in the index layer data segment 336, thereby generating a filtered index layer data segment. In particular, the database management application 204 removes the rows associated with data that is outside the data range of interest. In this example, the database management application 204 keeps the first, third, fourth and sixth rows of the index layer data segment 336 shown in FIG. 4C, and discards the remaining rows. Rows with column identifiers '2' and '3' can be discarded because 'col-2' and 'col-5' of the data are stored in columns with identifiers '1' and '4'. Likewise, the final three rows of the index layer data segment 336 shown in FIG. 4C can be discarded because they are outside of the date range of interest.

At 634, the database management application 204 generates unique data layer keys 314 from the data stored in the filtered index layer data segment. In this example, the database management application 204 generates four data layer keys 314 (from the data in the retained rows of the index layer data segment 336). For example, the database management application 204 reads the values from the sixth row of the index layer data segment 336 (i.e. the final row of the filtered index layer data segment), to generate the following data layer key 314:
prefix/tdata/*sTt*test-symbol*0*1666793828627893430*6984654156164684*946857600000000000*9469440000000 00000

At 636, the database management application 204 requests to read the data layer data segments 316 (i.e. chunks) associated with the data layer keys 314 from the data store 212. At 638, the data store 212 returns the requested data layer data segments 316. In this example, the following data layer data segments 316 are returned:

| | col-1 | col-2 |
|---|---|---|
| 2000-01-01 | 0 | 10 |
| 2000-01-02 | 1 | 11 |

| | col-5 | col-6 |
|---|---|---|
| 2000-01-01 | 40 | 50 |
| 2000-01-02 | 41 | 51 |

| | col-1 | col-2 |
|---|---|---|
| 2000-01-03 | 2 | 12 |
| 2000-01-04 | 3 | 13 |

| | col-5 | col-6 |
|---|---|---|
| 2000-01-03 | 42 | 52 |
| 2000-01-04 | 43 | 53 |

The data layer data segments 316 returned by the data store 212 may be in compressed format. Accordingly, the database management application 204 may decompress the returned data layer data segments 316.

It can be seen that the data layer data segments 316 returned by the data store 212 include some data that is outside of the data range specified by the user 401. This is because the size of the data chunks (i.e. 2×2 in this example) exceeds the data range specified by the user 401 (i.e. single columns of data). Accordingly, at 640, the database management application 204 discards data from the data chunks that is outside the data range of interest. In this example, the 'col-1' and 'col-6' columns of data are discarded, along with data with dates 2000-01-01 and 2000-01-04.

Once the data outside the data range has been discarded, the database management application 204 recombines, at 642, the remaining data into a single dataframe. In this example, the recombined data is as follows:

| | col-2 | col-5 |
|---|---|---|
| 2000-01-02 | 11 | 41 |
| 2000-01-03 | 12 | 42 |

The recombined data is then returned, at 644, to the user 401, for example by displaying the recombined data at the client device 202 on which the database management application 204 is running.

It will be appreciated that, in process 600, if the user 401 had wanted to read a specific data range from version '1' of the data, then steps 618 to 622 of process 600 would be omitted, and the process 600 would move from 616 to 624, at which the index layer key 334 would be generated from the values stored in the version '1' version layer data segment 356.

It will also be appreciated that, in process 600, if the user 401 did not want a specific range of data (i.e. all data was to be retrieved), then no data range would be received in the request at 602, no filtering would be carried out at 630 and 632, and no data would be discarded at 640.

The database management application 204 can also deduplicate data when writing new data to the data store 212. To do this, the database management application 204 can carry out steps 602 to 616 and 624 to 628 in order to retrieve an index layer data segment 336 associated with version *(N* - *1)* of the data. Then, the database management application 204 can carry out steps 512 to 520 in order to generate an index layer data segment 336 associated with version *N* of the data.

Once the database management application 204 has retrieved the version *(N - 1)* index layer data segment 336 and generated the version *N* index layer data segment 336, the database management application 204 can compare the content hashes, and optionally the start and end indices, of the data in the two index layer data segments 336. For time series data, if any rows of the version *(N - 1)* and version *N* index layer data segments 336 have the same content hash and start and end indices, then the database management application 204 can discard that row of the version *N* index layer data segment 336 (effectively discarding that chunk of the version *N* data). For data that is not time series data (e.g. where the ordering of the data does not matter), the deduplication of the data may be based on comparing only the content hashes of the rows of the version *(N - 1)* and version *N* index layer data segments. This avoids the database management application 204 writing data that is already stored in the data store 212. By deduplicating data, subsequent versions of data append data to the data store 212, rather than overwriting it. This appending of data can be tracked using the index layer data segment 330. For example, if version '0' of a user's data includes rows 1 to 5 of data, and a chunk size of 5 rows is assumed, then the version '0' data layer data segment 316 would include rows 1 to 5, and the values of the version '0' data layer key 314 would be identified in the version '0' index layer data segment 336. Then, if version '1' of a data segment includes rows 1 to 10, then the version '1' data would be stored across two chunks: one including rows 1 to 5, and one including rows 6 to 10. When writing the version '1' data, the database management application 204 would identify that the chunk with rows 1 to 5 was a duplicate based on the start and end indices in the version '0' index layer data segment 336 and version '1' index layer data segment 336, because it was already stored when writing version '0'. Accordingly, the database management application 204 would discard this chunk of data. To identify the version '1' data, the version '1' index layer data segment 336 would append the values of the version '1' data layer key 314 for the chunk with rows 6 to 10 to the version '0' index layer data segment 336. This means that the version '1' index layer data segment 336 would include values allowing the version '1' data layer key for the row 6-10 chunk to be generated, and values allowing the version '0' data layer key for the row 1-5 chunk to be generated. In this way, the full version '1' data can be generated from the version '1' index layer data segment 336.

### Flow diagrams

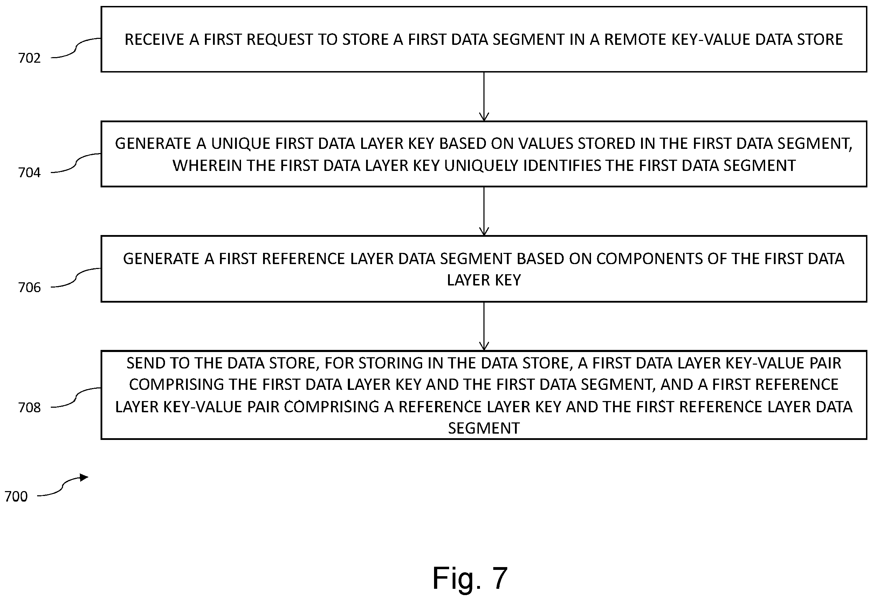

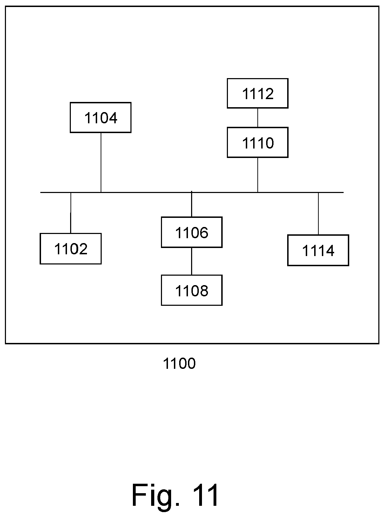

FIG. 7 is a flowchart of a method 700, implemented at a client device 202, for writing data to the data store 212. The method 700 may, for example, be implemented at one or more processors of the apparatus 1100 shown in FIG. 11. In particular, the method 700 may be implemented in the form of an application (e.g. database management application 204) comprising instructions stored on a transitory or non-transitory computer-readable medium (as described further below), or a computer program, wherein the instructions are executable by the one or more processors to cause the client device 202 to implement the method 700.

At 702, the client device 202 receives a first request to store a first data segment 316 in the remote key-value data store 212.

At 704, the client device 202 generates a unique first data layer key 314 based on values stored in the first data segment 316. The first data layer key 314 uniquely identifies the first data segment 316.

At 706, the client device 202 generates a first reference layer data segment 376 based on components of the first data layer key 314.

At 708, the client device 202 sends to the data store 212 over the network 208, for storing in the data store 212, a first data layer key-value pair 312 comprising the first data layer key 314 and the first data segment 316, and a first reference layer key-value pair 372 comprising a reference layer key 374 and the first reference layer data segment 376.

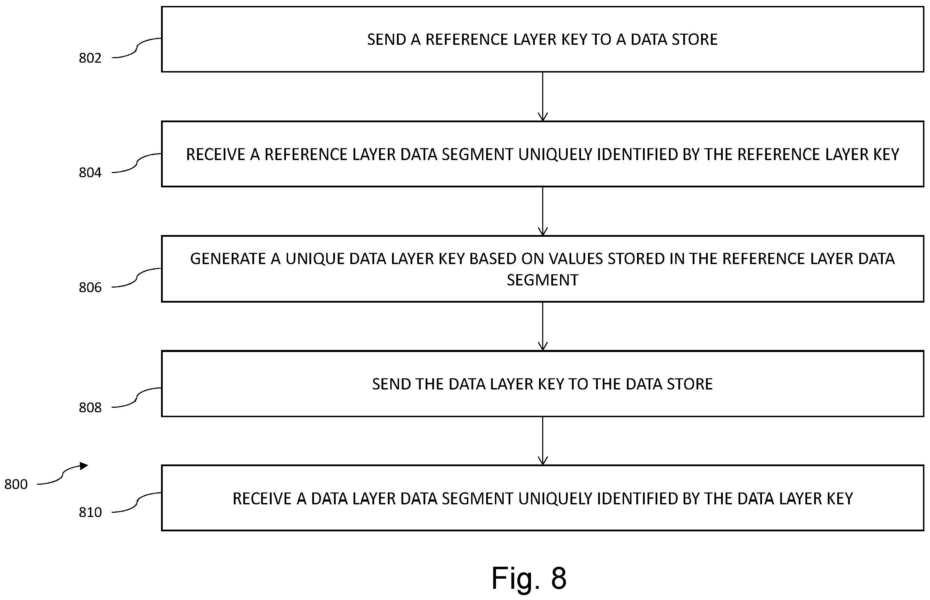

FIG. 8 is a flowchart of a method 800, implemented at a client device 202, for reading data from the data store 212. The method 800 may, for example, be implemented at one or more processors of the apparatus 1100 shown in FIG. 11. In particular, the method 800 may be implemented in the form of an application (e.g. database management application 204) comprising instructions stored on a transitory or non-transitory computer-readable medium (as described further below), or a computer program, wherein the instructions are executable by the one or more processors to cause the client device 202 to implement the method 800.

At 802, the client device 202 sends a reference layer key 374 to the data store 212.

At 804, the client device 202 receives, from the data store 212, a reference layer data segment 376 uniquely identified by the reference layer key 374.

At 806, the client device 202 generates a unique data layer key 314 based on values stored in the reference layer data segment 376.

At 808, the client device 202 sends the data layer key 314 to the data store 212.

At 810, the client device 202 receives a data layer data segment 316 uniquely identified by the data layer key 314.

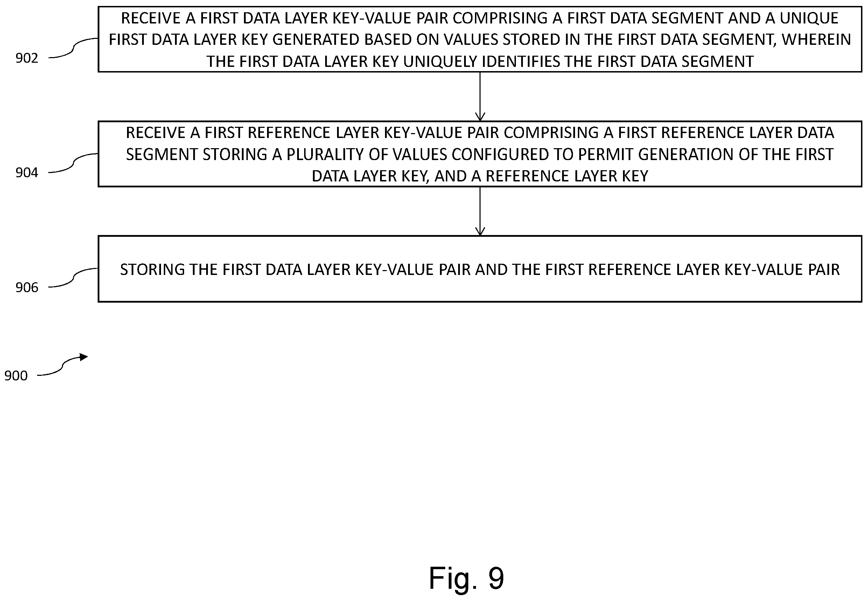

FIG. 9 is a flowchart of a method 900, implemented at a data store 212 (e.g. by a computing device associated with the data store 212), for writing data to the data store 212. The method 900 may, for example, be implemented at one or more processors of the apparatus 1100 shown in FIG. 11. In particular, the method 900 may be implemented in the form of an application comprising instructions stored on a transitory or non-transitory computer-readable medium (as described further below), or a computer program, wherein the instructions are executable by the one or more processors to cause the method 900 to be implemented.

At 902, the data store 212 receives a first data layer key-value pair 312 comprising a first data segment 316 and a unique first data layer key 314 generated based on values stored in the first data segment 316. The first data layer key 314 uniquely identifies the first data segment 316.

At 904, the data store 212 receives a first reference layer key-value pair 372 comprising a reference layer key 374 and a first reference layer data segment 376 storing a plurality of values configured to permit generation of the first data layer key 314. The first reference layer key-value pair 372 may be received together with the first data layer key-value pair 312.

At 906, the data store 212 stores the first data layer key-value pair 312 and the first reference layer key-value pair 372.

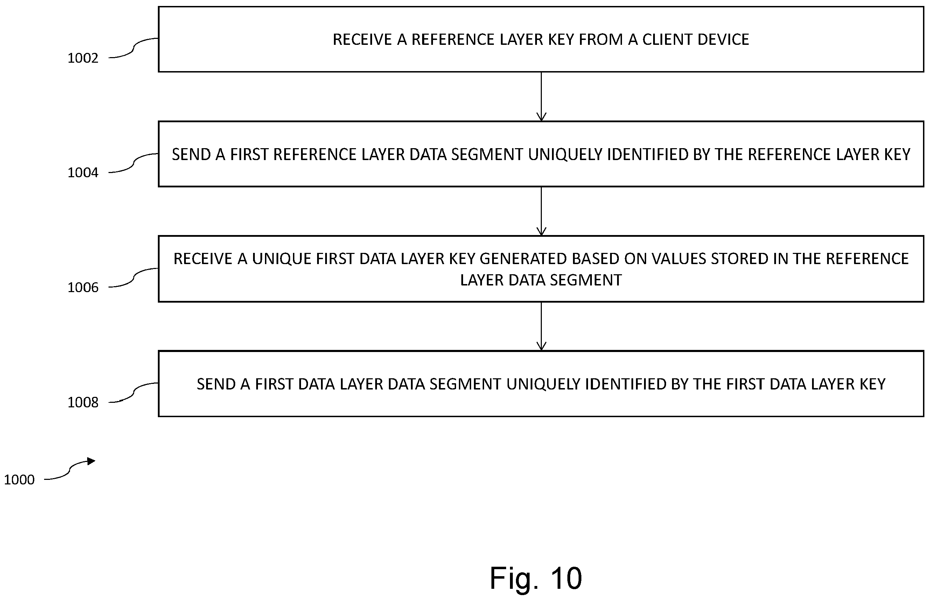

FIG. 10 is a flowchart of a method 1000, implemented at a data store 212 (e.g. by a computing device associated with the data store 212), for writing data to the data store 212. The method 1000 may, for example, be implemented at one or more processors of the apparatus 1100 shown in FIG. 11. In particular, the method 1000 may be implemented in the form of an application comprising instructions stored on a transitory or non-transitory computer-readable medium (as described further below), or a computer program, wherein the instructions are executable by the one or more processors to cause the method 1000 to be implemented.

At 1002, the data store 212 receives a reference layer key 374 from a client device 202.

At 1004, the data store 212 sends, to the client device 202, a first reference layer data segment 376 uniquely identified by the reference layer key 374.

At 1006, the data store 212 receives, from the client device 202, a unique first data layer key 314 generated based on values stored in the reference layer data segment 376.

At 1008, the data store 212 sends, to the client device 202, a first data layer data segment 316 uniquely identified by the first data layer key 314.

The ordering of the steps of the methods described with reference to FIGS. 7 to 10 is not intended to convey that the methods are limited to being performed in the order described. It will be appreciated that certain steps may be performed in a different order to that described above.

### Computer system

Turning finally to FIG. 11, shown is a schematic and simplified representation of a computer apparatus 1100 which can be used to perform the methods described herein, either alone, in combination with other computer apparatuses or as part of a "cloud" computing arrangement.

The computer apparatus 1100 comprises various data processing resources such as a processor 1102 (in particular a hardware processor) coupled to a central bus structure. Also connected to the bus structure are further data processing resources such as memory 1104. A display adapter 1106 connects a display device 1108 to the bus structure. One or more user-input device adapters 1110 connect a user-input device 1112, such as a keyboard and/or a mouse to the bus structure. One or more communications adapters 1114 are also connected to the bus structure to provide connections to other computer systems 1100 and other networks.

In operation, the processor 1102 of computer system 1100 executes a computer program comprising computer-executable instructions that may be stored in memory 1104. When executed, the computer-executable instructions may cause the computer system 1100 to perform one or more of the methods described herein. The results of the processing performed may be displayed to a user via the display adapter 1106 and display device 1108. User inputs for controlling the operation of the computer system 1100 may be received via the user-input device adapters 1110 from the user-input devices 1112.

It will be apparent that some features of computer system 1100 shown in FIG. 11 may be absent in certain cases. For example, one or more of the plurality of computer apparatuses 1100 may have no need for display adapter 1106 or display device 1108. This may be the case, for example, for particular server-side computer apparatuses 1100 which are used only for their processing capabilities and do not need to display information to users. Similarly, user input device adapter 1110 and user input device 1112 may not be required. In its simplest form, computer apparatus 1100 comprises processor 1102 and memory 1104.

Variations or modifications to the systems and methods described herein are set out in the following paragraphs.

Although the implementations described above are set out with reference to storage in a remote data store across a network, it will be appreciated that the data structures described herein could also be used for storing data in local storage. In particular, the data structures described herein may provide local storage advantages, including: access to older versions of data, deduplication of data at the index layer when writing data, and filtering of data at the index layer when reading data. Such advantages may allow data to be more efficiently accessed from the local storage.

While various specific combinations of components and method steps have been described, these are merely examples. Components and method steps may be combined in any suitable arrangement or combination. Components and method steps may also be omitted to leave any suitable combination of components or method steps.

The described methods may be implemented using computer executable instructions. A computer program product or computer readable medium may comprise or store the computer executable instructions. The computer program product or computer readable medium may comprise a hard disk drive, a flash memory, a read-only memory (ROM), a CD, a DVD, a cache, a random-access memory (RAM) and/or any other storage media in which information is stored for any duration (e.g., for extended time periods, permanently, brief instances, for temporarily buffering, and/or for caching of the information). A computer program may comprise the computer executable instructions. The computer readable medium may be a tangible or non-transitory computer readable medium. The term "computer readable" encompasses "machine readable".

The singular terms "a" and "an" should not be taken to mean "one and only one". Rather, they should be taken to mean "at least one" or "one or more" unless stated otherwise. The word "comprising" and its derivatives including "comprises" and "comprise" include each of the stated features, but does not exclude the inclusion of one or more further features.

The above implementations have been described by way of example only, and the described implementations are to be considered in all respects only as illustrative and not restrictive. It will be appreciated that variations of the described implementations may be made without departing from the scope of the invention. It will also be apparent that there are many variations that have not been described, but that fall within the scope of the appended claims.

## Claims

1. A computer-implemented method, comprising:
receiving, at a client device, a first request to store a first data segment in a remote key-value data store;
generating, at the client device, a unique first data layer key based on values stored in the first data segment, wherein the first data layer key uniquely identifies the first data segment;
generating, at the client device, a first reference layer data segment based on components of the first data layer key; and
sending, to the data store over a network, for storing in the data store:
a first data layer key-value pair comprising the first data layer key and the first data segment; and
a first reference layer key-value pair comprising a reference layer key and the first reference layer data segment.

2. A computer-implemented method according to claim 1, wherein generating, at the client device, the first reference layer data segment based on components of the first data layer key comprises:
generating, at the client device, a first version layer data segment based on components of the first data layer key;
generating, at the client device, a unique first version layer key based on values stored in the first version layer data segment, wherein the first version layer key uniquely identifies the first version layer data segment;
generating, at the client device, the first reference layer data segment based on components of the first version layer key; and
sending, to the data store over the network, a first version layer key-value pair comprising the first version layer key and the first version layer data segment, for storing in the data store.

3. A computer-implemented method according to claim 1, wherein generating, at the client device, the first reference layer data segment based on components of the first data layer key comprises:
generating, at the client device, a first index layer data segment based on components of the first data layer key;
generating, at the client device, a unique first index layer key based on values stored in the first index layer data segment, wherein the first index layer key uniquely identifies the first index layer data segment;
generating, at the client device, the first reference layer data segment based on components of the first index layer key; and
sending, to the data store over the network, a first index layer key-value pair comprising the first index layer key and the first index layer data segment, for storing in the data store.

4. A computer-implemented method according to claim 3, wherein generating, at the client device, the first reference layer data segment based on components of the first index layer key comprises:
generating, at the client device, a first version layer data segment based on components of the first index layer key;
generating, at the client device, a unique first version layer key based on values stored in the first version layer data segment, wherein the first version layer key uniquely identifies the first version layer data segment;
generating, at the client device, the first reference layer data segment based on components of the first version layer key; and
sending, to the data store over the network, a first version layer key-value pair comprising the first version layer key and the first version layer data segment, for storing in the data store.

5. A computer-implemented method according to claim 3 or claim 4, wherein generating, at the client device, the first data layer key comprises:
splitting, at the client device, the first data segment into a plurality of first data segment chunks; and
generating, at the client device, a plurality of unique first data layer keys, wherein each of the plurality of first data layer keys is generated based on values stored in a respective one of the plurality of first data segment chunks;
wherein the first index layer data segment is generated based on components of each of the plurality of first data layer keys.

6. A computer-implemented method according to any of claims 1 to 5, further comprising:
compressing, at the client device, the first data segment;
wherein the first data layer key-value pair comprises the first data layer key and the compressed first data segment.

7. A computer-implemented method according to any of claims 1 to 6, further comprising:
receiving, at a client device, a second request to store a second data segment in the data store;
generating, at the client device, a unique second data layer key based on the values stored in the second data segment, wherein the second data layer key uniquely identifies the second data segment;
generating, at the client device, a second reference layer data segment based on components of the second version layer key; and
sending, to the data store over the network, for storing in the data store:
a second data layer key-value pair comprising the second data layer key and the second data segment; and
a second reference layer key-value pair comprising the reference layer key and the second reference layer data segment.

8. A computer-implemented method according to claim 7 when dependent on claim 2 or claim 4, wherein generating, at the client device, the second reference layer data segment based on components of the second data layer key comprises:
generating, at the client device, a second version layer data segment based on components of the second data layer key, wherein generating the second version layer data segment comprises:
storing, in the second version layer data segment, a first plurality of values configured to permit generation of the second data layer key; and
storing, in the second version layer data segment, a second plurality of values configured to permit generation of the first version layer key;
generating, at the client device, a unique second version layer key based on values stored in the second version layer data segment, wherein the second version layer key uniquely identifies the second version layer data segment;
generating, at the client device, the second reference layer data segment based on components of the second version layer key; and
sending, to the data store over the network, a second version layer key-value pair comprising the second version layer key and the second version layer data segment, for storing in the data store.

9. A computer-implemented method according to claim 7 or claim 8, wherein generating, at the client device, the second data layer key comprises:
splitting, at the client device, the second data segment into a plurality of second data segment chunks;
generating, at the client device, a plurality of unique second data layer keys, wherein each of the plurality of second data layer keys is generated based on values stored in a respective one of the plurality of second data segment chunks;
generating, at the client device, a second index layer data segment based on components of each of the plurality of second data layer keys;
identifying, at the client device, duplicated data by comparing values stored in the second index layer data segment with values stored in the first index layer data segment;
generating, at the client device, a deduplicated second index layer data segment by removing any identified duplicated data from the second index layer data segment; and
generating, at the client device, a unique second index layer key based on values stored in the deduplicated second index layer data segment;
wherein the second reference layer data segment is generated based on components of the second index layer key.

10. A computer-implemented method, comprising:
sending, from a client device in communication with a remote key-value data store over a network, a reference layer key to the data store;
receiving, from the data store, a reference layer data segment uniquely identified by the reference layer key;
generating, at the client device, a unique data layer key based on values stored in the reference layer data segment;
sending, from the client device, the data layer key to the data store; and
receiving, from the data store, a data layer data segment uniquely identified by the data layer key.

11. A computer-implemented method according to claim 10, wherein generating, at the client device, the data layer key based on values stored in the reference layer data segment comprises:
generating, at the client device, a unique index layer key based on values stored in the reference layer data segment;
sending, from the client device, the index layer key to the data store;
receiving, from the data store, an index layer data segment identified by the index layer key; and
generating, at the client device, the data layer key based on values stored in the index layer data segment.

12. A computer-implemented method according to claim 11, further comprising:
receiving, at the client device, a request comprising a data range of interest;
generating, at the client device, a filtered index layer data segment by filtering the values in the index layer data segment in accordance with the data range;
wherein the data layer key is generated at the client device based on values stored in the filtered index layer data segment.

13. A computer-implemented method, comprising:
receiving, at a key-value value data store in communication with a remote client device over a network:
a first data layer key-value pair comprising:
a first data segment; and
a unique first data layer key generated based on values stored in the first data segment;
wherein the first data layer key uniquely identifies the first data segment; and
a first reference layer key-value pair comprising:
a first reference layer data segment storing a plurality of values configured to permit generation of the first data layer key; and
a reference layer key; and
storing, at the data store, the first data layer key-value pair and the first reference layer key-value pair.

14. A computer-implemented method, comprising:
receiving, at a key-value data store in communication with a remote client device over a network, a reference layer key from the client device;
sending, from the data store, a first reference layer data segment uniquely identified by the reference layer key;
receiving, from the client device, a unique first data layer key generated based on values stored in the reference layer data segment; and
sending, from the data store, a first data layer data segment uniquely identified by the first data layer key.

15. A computer-readable medium or computer program comprising computer-executable instructions which, when executed by one or more processors of a device, cause the device to carry out the method of any of claims 1 to 14; or a device comprising one or more processors configured to perform the method of any of claims 1 to 14.
